(19) Europäisches Patentamt
European Patent Office
Office européen des brevets

(11) EP 1 557 440 B1

(12) **EUROPEAN PATENT SPECIFICATION**

(45) Date of publication and mention of the grant of the patent:
**16.07.2008 Bulletin 2008/29**

(21) Application number: **05250238.2**

(22) Date of filing: **17.01.2005**

(51) Int Cl.:
*C08G 73/00* (2006.01) *C08G 73/18* (2006.01)
*C08G 73/22* (2006.01) *C08G 75/32* (2006.01)
*C08J 5/18* (2006.01) *C09K 19/02* (2006.01)
*B29C 67/00* (2006.01)

(54) **Article formed of polybenzazole and production method for the same**

Gegenstand aus Polybenzazol und Verfahren zu dessen Herstellung

Article formé à base de polybenzazole et son procédé de préparation

(84) Designated Contracting States:
**DE FR GB NL**

(30) Priority: **20.01.2004 JP 2004012136**

(43) Date of publication of application:
**27.07.2005 Bulletin 2005/30**

(73) Proprietor: **POLYMATECH CO., LTD.**
**Tokyo 103-8424 (JP)**

(72) Inventors:
- **Saitoh, Fumio**
**Kita-ku**
**Tokyo 114-0014 (JP)**
- **Kimura, Toru**
**Kita-ku**
**Tokyo 114-0014 (JP)**
- **Tobita, Masayuki**
**Kita-ku**
**Tokyo 114-0014 (JP)**

(74) Representative: **Sherrard-Smith, Hugh et al**
**Appleyard Lees**
**15 Clare Road**
**Halifax HX1 2HY (GB)**

(56) References cited:
**EP-A- 0 265 921** **EP-A- 1 384 743**

- **PATENT ABSTRACTS OF JAPAN vol. 1995, no. 04, 31 May 1995 (1995-05-31) & JP 07 013168 A (CASIO COMPUT CO LTD), 17 January 1995 (1995-01-17)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 557 440 B1

## Description

The present invention relates to an article formed of polybenzazole having excellent anisotropic characteristics through highly orientated molecular chains, and to a production method for the same.

A film formed of polybenzazole has high strength, high modulus of elasticity, excellent heat resistance, and excellent flame resistance. Thus, many improved articles formed of polybenzazole including a film have been proposed for novel applications thereof such as a magnetic tape, an insulating film for an electrical or electric component, and a liquid crystal alignment layer. For example, Japanese Laid-open Patent Publication No. 04-202257 disclosesa specific wholly aromatic heterocyclic polymer composition which is uniform and causes no phase separation, and a film of the same. Japanese Laid-open Patent Publication No. 11-171993 discloses a polybenzazole film having excellent lubricity and specific surface roughness.

Japanese Laid-open Patent Publication No. 2000-273214 discloses a polybenzazole film having specific ductility or Young's modulus, which is suitable for a magnetic recording medium. Japanese Laid-open Patent Publication No. 2001-011311 discloses a polybenzazole film containing a specific anthraquinone compound, which is hardly subjected to oxidative deterioration even during exposure to sunlight. Japanese Laid-open Patent Publication No. 63-074612 discloses a production method for a polyparaphenylene benzobisthiazole film. Further, Japanese National Phase Laid-open Patent Publication No. 06-503521 discloses a polybenzazole film orientated in a stretching direction through biaxial stretching.

An article formed of polybenzazole, in particular, used for a semiconductor packaging material or an electronic device material, is heretofore desired to have particularly enhanced anisotropic characteristics in a specific direction of the article for various properties such as optical properties, magnetic properties, mechanical properties, thermal properties, and electrical properties, in addition to high strength, highmodulus of elasticity, and high heat resistance. However, a conventional technique such as a mechanical stretching method or a method utilizing shear flow only provides an article formed of polybenzazole having molecular chains of polybenzazole orientated in a direction along a surface of the article because the molecular chains of polybenzazole are each a stiff rod. Thus, the conventional technique could not provide a film having highly orientated molecular chains in a thickness direction of the film to develop anisotropic characteristics in that direction.

The present invention has been made in view of the problems of the aforementioned conventional technique. An object of the present invention is therefore to provide an article formed of polybenzazole, which may have excellent anisotropic characteristics through highly orientated molecular chains, and a production method for the same.

The present invention provides an article formed of polybenzazole. Said polybenzazole includes at least one repeating unit, represented by one of the following formulas (1) to (4),

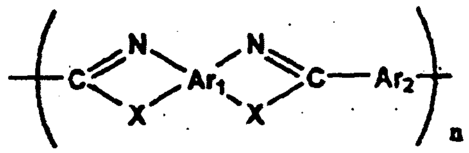

(1)

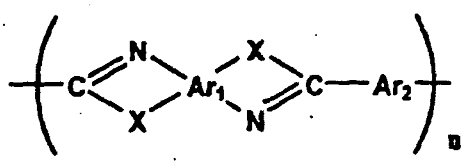

(2)

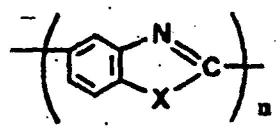

(3)

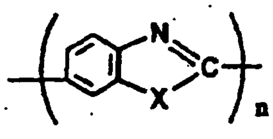

(4)

wherein X represents one of a sulfur atom, an oxygen atom and an imino group, $Ar_1$ and $Ar_2$ respectively represent aromatic hydrocarbon groups, and n is an integer of 10 to 500.

In one aspect, molecular chains of said polybenzazole are orientated in a specific direction. A degree of orientation A of the molecular chains is 0.6 or more and less than 1 as defined by the following expression (i):

$$\text{Degree of orientation } A = (180-\Delta B)/180 \qquad \text{(i)}$$

wherein $\Delta B$ is a full width at half maximum of a peak in an X-ray diffraction intensity distribution pattern in an azimuthal angle direction obtained by measuring an intensity distribution from 0 to 360 degrees in the azimuthal angle direction, at a peak scattering angle, in an X-ray diffraction image of the article.

In another aspect, molecular chains of said polybenzazole are orientated in a first direction. Anisotropic magnetic susceptibility $\Delta_x$ of the article is in a range of $1.0 \times 10^{-8}$ to $1.0 \times 10^{-6}$ [emu/g] as defined by the following expression (ii):

$$\text{Anisotropic magnetic susceptibility } \Delta_x = \chi_{//} - \chi_{\perp} \qquad \text{(ii)}$$

wherein $\chi_{//}$ is magnetic susceptibility in a first direction of the article, and $\chi_{\perp}$ is magnetic susceptibility in a second direction, perpendicular to the first direction, of the article.

The present invention also provides methods for producing the above-described articles. The methods comprise steps of preparing a liquid containing said polybenzazole, shaping the liquid containing said polybenzazole into a desired shape, applying one of magnetic and electric fields in a specific direction to the liquid containing said polybenzazole in the desired shape so as to orientate the molecular chains of said polybenzazole therein in the specific direction, solidifying the liquid in the desired shape while the orientation of the molecular chains is maintained.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a perspective view showing an embodiment of an article formed of polybenzazole according to the present invention;
Fig. 2 is a graph showing an example of an X-ray diffraction pattern of an article formed of polybenzazole in an embodiment according to the present invention in a radial direction from the center of a Debye ring;
Fig. 3 is a graph showing an example of anX-raydiffraction intensity distribution of an article formed of polybenzazole in an embodiment according to the present invention in the direction of an azimuthal angle;
Fig. 4 is a graph showing an example of magnetization properties of an article formed of polybenzazole in an embodiment according to the present invention;
Fig. 5 is a schematic diagram showing a production method for an article formed of polybenzazole having molecular chains of polybenzazole orientated in a thickness direction of the article;
Fig. 6 is a schematic diagram showing an apparatus used for a production method for an article formed of polybenzazole having molecular chains of polybenzazole orientated in a direction along a surface of the article;
Fig. 7 is a graph showing an X-ray diffraction pattern of an article formed of polybenzazole of Comparative Example 1 in a radial direction from the center of a Debye ring;
Fig. 8 is a graph showing an X-ray diffraction intensity distribution of the article formed of polybenzazole of Comparative Example 1 in the direction of an azimuthal angle; and
Fig. 9 is a graph showing a relationship between anisotropic magnetic susceptibility $\Delta_X$ and thermal conductivity $\lambda$ of an article formed of polybenzazole of each of Examples and Comparative Examples.

Hereinafter, embodiments of an article formed of polybenzazole of the present invention will be described.

Fig. 1 shows a specific embodiment of the article formed of polybenzazole in accordance with the present

invention as a polybenzazole film 1. In the polybenzazole film 1 shown in Fig. 1, molecular chains of polybenzazole are highly orientated in a specific direction such as the X-axis, Y-axis, or Z-axis of Fig. 1. In this way, the polybenzazole film 1 has enhanced anisotropic characteristics in various properties such as optical properties, magnetic properties, mechanical properties, thermal properties, and electrical properties in the specific direction.

In the present invention, polybenzazole refers to a polymer containing at least one compound selected from the group consisting of polybenzoxazole (PBO), polybenzothiazole (PBT), and polybenzimidazole (PBI). Examples of polybenzazole include: a homopolymer composed of one compound selected from the group consisting of PBO, PBT, and PBI; a mixture, blockcopolymer, or random copolymer composed of two or more compounds selected from the group consisting of PBO, PBT, and PBI; and a copolymer containing at least one compound selected from the group consisting of PBO, PBT, and PBI.

PBO refers to a polymer containing a repeating unit having at least one oxazole ring bonded to an aromatic group, such as poly(phenylenebenzobisoxazole). PBT refers to a polymer containing a repeating unit having at least one thiazole ring bonded to an aromatic group, such as poly(phenylenebenzobisthiazole). PBI refers to a polymer containing a repeating unit having at least one imidazole ring bonded to an aromatic group, such as poly(phenylenebenzimidazole).

To be specific, the article in an embodiment according to the present invention is formed from polybenzazole having at least one repeating unit selected from the repeating units represented by the following formulas (1) to (4):

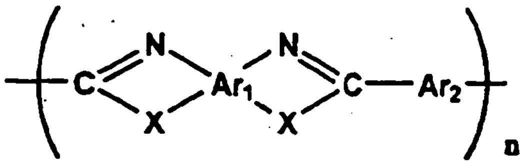

(1)

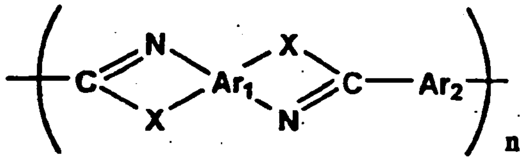

(2)

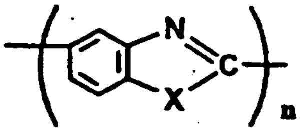

(3)

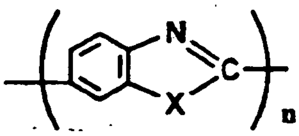

(4)

wherein, X represents a sulfur atom, an oxygen atom, or an imino group; $Ar_1$ and $Ar_2$ each represent an aromatic hydrocarbon group; and n is an integer of 10 to 500.

Specific examples of $Ar_1$ include moieties represented by the following formulas (I) to (IV).

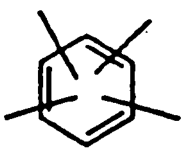

(I)

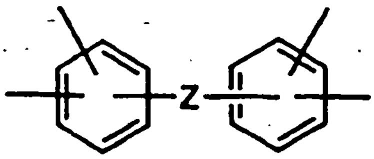

(I I)

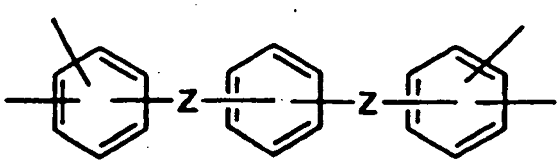

(I I I)

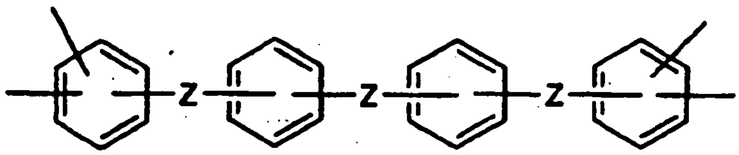

(I V)

Specific examples of $Ar_2$ include moieties represented by the following formulas (V) to (VIII).

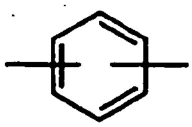

(V)

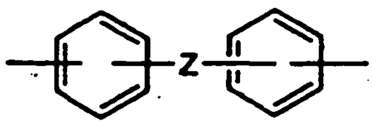

(V I)

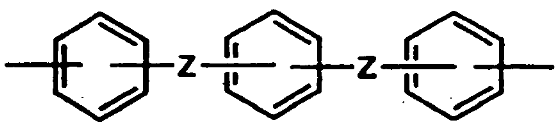

(V I I)

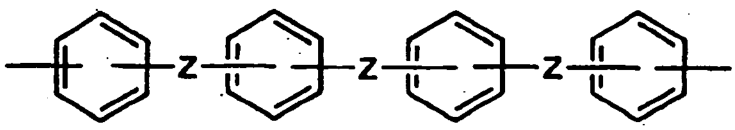

(V I I I)

In the above formulas (I) to (VIII), each Z represents any one of an oxygen atom, a sulfur atom, $SO_2$, CO, $CH_2$, $C(CH_3)_2$, $CF_2$, and $C(CF_3)_2$, or a direct bond between carbon atoms of adjacent benzene rings. In the benzene rings of the above formulas (I) to (VIII), each hydrogen atom bonded to a carbon atommaybe substitutedwith a lower alkyl group, a lower alkoxyl group, a halogen atom, an alkyl halide group such as trifluoromethyl, a nitro group, a sulfonic acid group, a phosphonic acid group, or the like. Such substitution reaction can be carried out with a raw material containing the corresponding moiety abovementioned before a polycondensation reaction, or with the corresponding moiety of polybenzazole after the polycondensation reaction.

Most preferably, the article in an embodiment according to the present invention is formed from polybenzazole having at least one repeating unit represented by the above formula (1) or (2), where X is an oxygen atom, and $Ar_1$ and $Ar_2$ is represented by the formulas (I) to (IV) and (V) to (VIII), where each Z represents an oxygen atom or a direct bond. Such a structure provides more linear molecular chains of polybenzazole. The linear molecular chains of polybenzazole

are orientated in a specific direction in the article, and thus, the article develops anisotropic characteristics at a higher level.

Further, polybenzazole used in the present invention may contain repeating units having unreacted open-ring portions represented by the following formulas (IX) and (X) produced during production of polybenzazole, in addition to the repeating units represented by the above formulas (1) to (4).

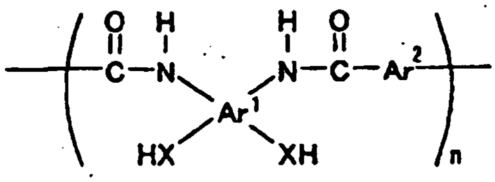

(I X)

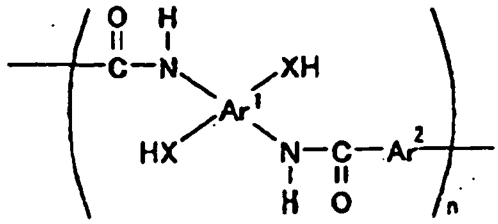

(X)

Polybenzazole having the repeating units represented by the above formulas (1) to (4) dissolves in a solvent to exhibit lyotropic liquid crystallinity in a certain concentration range. At this time, molecular chains of polybenzazole are orientated with a specific regularity. In such a state, molecular chains of polybenzazole, are orientated in a desired specific direction by means of application of a magnetic field, or an electric field. Thereby, an article having highly orientated molecular chains of polybenzazole can be obtained. Thus, the article formed of polybenzazole in an embodiment according to the present invention can develop anisotropic characteristics through orientated molecular chains of polybenzazole in a specific direction.

Orientation of molecular chains of polybenzazole can be confirmed through a method of measuring optical anisotropy (phase difference, birefringence) using two polarizers or a polarization microscope or through analysis by polarized infrared absorption spectroscopy, if the article formed of polybenzazole has a light transmittance above a certain level. Further, the orientation of the molecular chains of polybenzazole can be confirmed through polarized Raman spectroscopy, X-ray diffraction analysis, electron diffraction analysis, electron microscopic observation, and the like.

Anisotropic characteristics developed in the article formed of polybenzazole of the present invention includes optical anisotropy, magnetic anisotropy, mechanical anisotropy, thermal anisotropy, and electrical anisotropy. For example, in the article formed of polybenzazole, molecular chains of polybenzazole orientated in a specific direction serve as a n-electron conjugated system. Thus, the article in an embodiment according to the present invention has the n-electron conjugated system extending in the specific direction, thereby developing magnetic anisotropy. In general, thermal conduction in an insulative material such as a polymer material occurs by scattering of phonons. The phonon presumably scatters easily along the length of the molecular chains. Accordingly, an article containing the molecular chains of polybenzazole orientated in a specific direction exhibits excellent thermal conductivity in the direction.

In an embodiment of the present invention, the molecular chains of polybenzazole are orientated in a specific direction in the article. The degree of orientation A of the molecular chains of polybenzazole as determined from the following expression (i), is in a range of 0.6 or more and less than 1.0.

$$\text{Degree of orientation A} = (180 - \Delta B) / 180 \cdots \text{(i)}$$

The degree of orientation A of the molecular chains of. polybenzazole can be determined through a wide angle X-ray diffraction measurement (transmission) of the article formed of polybenzazole.

In order to determine the degree of orientation A, the article formed of polybenzazole is subjected to the wide angle X-ray diffraction measurement. In the X-ray diffraction measurement, a sample containing orientated particles (molecular chains) provides a concentric arcuate diffraction image called a "Debye ring" through irradiation of the sample with X-rays. Then, a diffraction pattern representing an X-ray diffraction intensity distribution of the sample in a radial direction, namely equational direction, of the Debye ring is obtained (see Fig. 2). In the diffraction pattern, the abscissa

axis represents 2θ, which is twice the X-ray diffraction angle θ. A diffraction peak can be observed at a specific position of the abscissa axis, namely a specific angle. It is thought that such a diffraction peak presumably represents the distance between the molecular chains of polybenzazole. While fixing the specific angle providing the diffraction peak (peak scattering angle), X-ray diffraction intensity distribution in the direction of an azimuthal angle (circumferential direction) of the debye ring is then measured from 0° to 360° to provide an X-ray diffraction intensity distribution pattern in a direction of the azimuthal angle at the peak scattering angle as shown in Fig. 3. A steeper peak in the intensity distribution pattern indicates the orientation of the molecular chains of polybenzazole in a specific direction at a higher level. Thus, the degree of orientation A of the molecular chains of polybenzazole can be calculated from the intensity distribution pattern in the direction of an azimuthal angle by: determining the width of a peak at half height (full width at half maximum, ΔB) of a peak in the pattern; and substituting the full width at half maximum ΔB into the above expression (i). For example, the degree of orientation A in the intensity distribution in the direction of an azimuthal angle as shown in Fig. 3 is 0.83.

The degree of orientation A in the article formed of polybenzazole in an embodiment according to the present invention is in a range of preferably 0.6 or more and less than 1.0, more preferably 0.7 or more and less than 1.0, most preferably 0.8 or more and less than 1.0. A degree of orientation A of less than 0.6 provides insufficiently orientated molecular chains of polybenzazole in the article. Thus, when anisotropy in thermal conductivity is expected, for example, sufficient thermal conductivity cannot be obtained in a specific direction of the article. Meanwhile, a degree of orientation A is never 1.0 or more in the above expression (i) because the full width at half maximum ΔB is always a positive value. In an article formed of polybenzazole, a degree of orientation A within a range of 0.6 or more and less than 1.0 shows that the article has sufficiently orientated molecular chains of polybenzazole. As a result, the article canexhibit excellentanisotropiccharacteristics,for example, high thermal conductivity in an orientation direction of the molecular chains of polybenzazole.

In another embodiment according to the present invention, an article formed of polybenzazole develops magnetic anisotropy due to orientation of the molecular chains of polybenzazole. In this embodiment, the article formed of polybenzazole has molecular chains of polybenzazole orientated in a first direction and has an anisotropic magnetic susceptibility Δχ determined from the following expression (ii) within a range of $1.0 \times 10^{-8}$ to $1.0 \times 10^{-6}$ [emu/g].

$$\text{Anisotropic magnetic susceptibility } \Delta\chi = \chi_{//} - \chi_{\perp} \quad \text{(ii)}$$

In the expression, $\chi_{//}$ represents magnetic susceptibility of the article in the first direction, and $\chi_{\perp}$ represents magnetic susceptibility of the same article in a second direction perpendicular to the first direction. In this embodiment, the molecular chains of polybenzazole are preferably orientated in the first direction by a magnetic field or an electrical field. The first direction corresponds to a direction in which the magnetic field or the electrical field is applied to the article for orientatingmolecular chains of polybenzazole during production of the article.

The magnetic susceptibility is measured in a specific direction of the article formed of polybenzazole using a superconducting quantum interference device, a vibrating sample magnetometer, or a magnetic anisotropy torque meter. The anisotropic magnetic susceptibility Δχ of the article formed of polybenzazole is calculated by measuring a magnetic field applied to the article and a magnetization formed therefrom at first. In this way, magnetization properties of the article formed of polybenzazole in a first direction (thickness direction of a film) and a second direction (direction along the film surface) as shown in Fig. 4 are obtained. Polybenzazole is a diamagnetic substance, and thus has a magnetic susceptibility of a negative value. Next, from the slope of a line representing the magnetic properties of the article in the first and second directions, magnetic susceptibility (χ//) of the article in a first direction, in which molecular chains of polybenzazole are orientated, and magnetic susceptibility ($X_{\perp}$) thereof in a second direction perpendicular to the first direction are determined. The magnetic susceptibilities are substituted into the expression (ii), to thereby calculate the anisotropic magnetic susceptibility ΔX. Fig. 4 shows an example of magnetization properties of the polybenzazole film 1 according to this embodiment (corresponding to Example 4 described below). The polybenzazole film 1 has molecular chains of polybenzazole orientated in the thickness direction of the film, and has a magnetic susceptibility ($X_{//}$) of -1.09 x $10^{-6}$ [emu/g] in a first direction (thickness direction) of the film andamagnetic susceptibility ($X_{\perp}$) of $-1.34 \times 10^{-6}$ [emu/g] ina seconddirection (direction along the surface of the film) perpendicular to the first direction. Thus, the film has an anisotropic magnetic susceptibility $\Delta_X$ of $2.46 \times 10^{-7}$ [emu/g].

The anisotropic magnetic susceptibility $\Delta_X$ is in a range of $1.0 \times 10^{-8}$ to 1.0 x $10^{-6}$ [emu/g], preferably $1\ .\ 0 \times 10^{-7}$ to 5.0 x $10^{-7}$ [emu/g]. An anisotropic magnetic susceptibility $\Delta_X$ of less than 1.0 x $10^{-8}$ in an article shows that the article has insufficiently orientated molecular chains of polybenzazole therein. In such an article, sufficient values for properties to be enhanced such as thermal conductivity cannot be obtained in the direction of the orientation. Meanwhile, an article formed of polybenzazole having an anisotropic magnetic susceptibility $\Delta_X$ exceeding $1.0 \times 10^{-6}$ is hardly obtained. An anisotropic magnetic susceptibility $\Delta_X$ within a range of $1.\ 0 \times 10^{-8}$ to 1 . 0 x $10^{-6}$ [emu/g] in an article shows

that the article is formed of polybenzazole having highly orientated molecular chains of polybenzazole in a specific direction (first direction). Thus, such an article has excellent anisotropic characteristics including a very high thermal conductivity λ in the specific direction, for example.

An article formed of polybenzazole in an embodiment according to the present invention can be used in applications requiring anisotropic characteristics. Such applications include an insulative film for a semiconductor, a circuit board material, a sealant, an orientated film for a liquid crystal display, a polarized film substrate, a magnetic recording film substrate, a condenser film, a solar cell, a sheet heating element, an electromagnetic-wave shielding film, a sensor, an actuator, a battery material, a packaging material, a gas barrier material, a laminate film, a filter, a separation membrane, and an ion-exchange membrane.

When the article formed of polybenzazole is formed into a film, the film preferably has a thickness in a range of 1 μm to 2 mm. A film thickness of less than 1 μm may cause defects such as breakage in the film. On the other hand, a filmthickness exceeding 2 mm causes difficulties in forming the film to possibly increase production cost.

A synthesis method for polybenzazole generally includes two methods: indirect polycondensation and direct polycondensation. Indirect polycondensation involves preparing a polybenzazole precursor and heat treating the polybenzazole precursor for ring closure of a nitrogen-containing ring forming portion of the precursor to obtain a target polybenzazole. Direct polycondensation involves directly reacting raw materials for ring closure of the nitrogen-containing ring forming portion without preparation of the polybenzazole precursor, to thereby obtain a target polybenzazole. Polybenzazole used in the present invention is preferably synthesized through direct polycondensation. In indirect polycondensation, the heat treatment of the polybenzazole precursor may cause a rearrangement of the polybenzazole molecules, inhibiting the orientation of the molecular chains in a desired direction.

Polybenzazole used in the present invention may be obtained through a condensation reaction of dicarboxylic acid represented by the following formula (5) or an amide-forming derivative thereof (hereinafter, collectively referred to as an "acid component") with an amino basic component represented by the following formula (6) or (7) or an aminobenzoic acid derivative represented by the following formula (8) or (9):

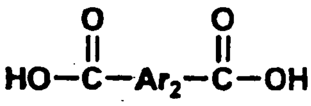

(5)

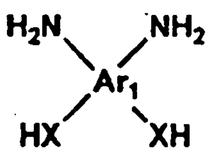

(6)

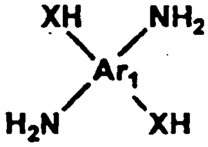

(7)

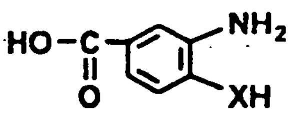

(8)

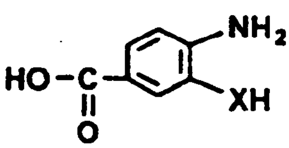

(9)

where, X represents a sulfur atom, an oxygen atom, or an imino group, $Ar_1$ and $Ar_2$ each represent an aromatic hydrocarbon group.

Specific examples of $Ar_2$ in the above formula (5) include moieties represented by the following formulas (V) to (VIII) , similar to the definition of the formulas (1) to (4).

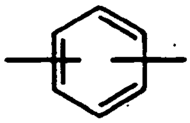

(V)

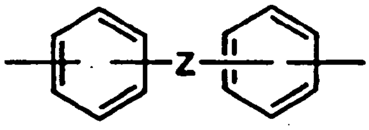

(V I)

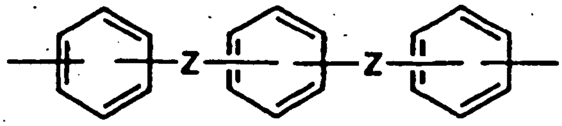

(V I I)

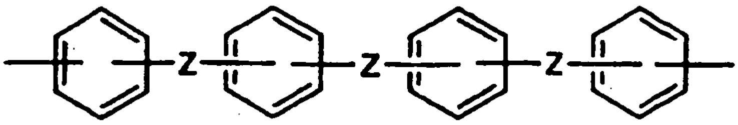

(V I I I)

Further, specific examples of $Ar_1$ in the above formula (6) or (7) include moieties represented by the following formulas (I) to (IV) , similar to the definition of the formulas (1) to (4).

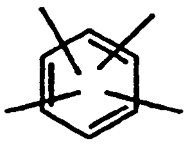

( I )

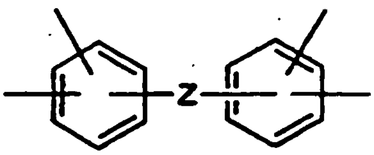

( I I )

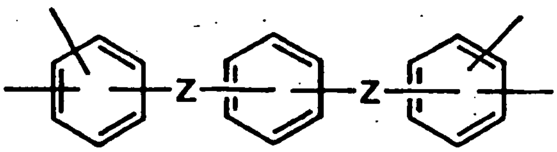

( I I I)

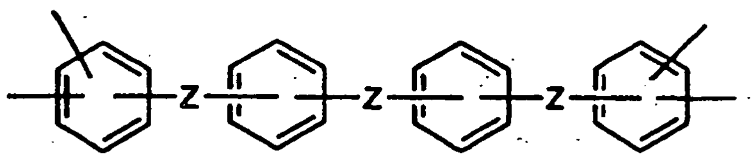

(I V)

In the above formulas (I) to (IV) , each Z represents any one of an oxygen atom, a sulfur atom, $SO_2$, CO, $CH_2$, $C(CH_3)_2$, $CF_2$, and $C(CF_3)_2$, or a direct bond between carbon atoms of adjacent benzene rings. In the benzene rings of the above formulas (I) to (IV), each hydrogen atom bonded to a carbon atom may be substituted with a lower alkyl group, a lower alkoxyl group, a halogen atom, an alkyl halide group such as trifluoromethyl, a nitro group, a sulfonic acid group, or a phosphonic acid group.

Specific examples of dicarboxylic acid represented by the above formula (5) include aromatic dicarboxylic acid such as: phthalic acid, isophthalic acid, terephthalic acid, 3,3'-dicarboxydiphenyl ether, 3,4'-dicarboxydiphenyl ether, 4,4'-dicarboxydiphenyl ether, 3,3'-dicarboxydiphenyl methane, 3,4'-dicarboxydiphenyl methane, 4,4'-dicarboxydiphenyl methane, 3,3'-dicarboxydiphenyl difluoromethane, 3,4'-dicarboxydiphenyl difluoromethane, 4,4'-dicarboxydiphenyl difluoromethane, 3,3'-dicarboxydiphenyl sulfone, 3,4'-dicarboxydiphenyl sulfone, 4,4'-dicarboxydiphenyl sulfone, 3,3'-dicarboxydiphenyl sulfide, 3,4'-dicarboxydiphenyl sulfide, 4,4'-dicarboxydiphenyl sulfide, 3,3'-dicarboxydiphenyl ketone, 3,4'-dicarboxydiphenyl ketone, 4,4'-dicarboxydiphenyl ketone, 2,2-bis(3-carboxylphenyl)propane, 2,2-(3,4'-dicarboxyldiphenyl)propane, 2,2-bis(9-carboxylphenyl)propane, 2,2-bis(3-carboxylphenyl)hexafluoropropane, 2,2-(3,4'-dicarboxyldiphenyl)hexafluoropropane, 2,2-bis(4,4'-carboxydiphenyl)hexafluoropropane, 1,3-bis(3-carboxyphenoxy)benzene, 1,4-bis(3-carboxyphenoxy)benzene, 1,4-bis(4-carboxyphenoxy)benzene, 3,3'-[1,4-phenylenebis(1-methylethylidene)] bisbenzoic acid, 3,4'-[1,4-phenylenebis(1-methylethylidene)]bisbenzoic acid, 4,4'-[1,4-phenylenebis(1-methylethylidene)]bisbenzoic acid, bis[4-(3-carboxylphenoxy)phenyl]sulfide, bis[9-(4-carboxylphenoxy)phenyl]sulfide, bis[4-(3-carboxylphenoxy)phenyl]sulfone, bis[4-(4-carboxylphenoxy)phenyl]sulfone; sulfonic acid-containing dicarboxylic acids and derivatives thereof including 2,5-dicarboxybenzenesulfonic acid, 3,5-dicarboxybenzenesulfonic acid, and 4,6-dicarboxy-1,3-disulfonic acid; and phosphonic acid-containing dicarboxylic acid and derivatives thereof including 2,5-dicarboxybenzene phosphonic acid, 3,5-dicarboxybenzene phosphonic acid, and 2,5-bisphosphonoterephthalicacid. A caboxylate ($COO^-$) group of dicarboxylic acid may form a salt with an alkali metal such as sodium or potassium, an alkali earth metal such as magnesium or calcium, ammonia, or amine. Such an ionic group-containing dicarboxylic acid may be used alone or in combination with two or more types thereof.

Specific examples of the amide-forming derivative of dicarboxylic acid represented by the above formula (5) include: an acid halide such as a dichloride or dibromide of dicarboxylic acid represented by the above formula (5) : and a dialkyl ester such as a dimethyl ester or a diethyl ester. Such an acid component may be used alone or in combination with two or more types thereof. The acid component may be in the form of a dihalide.

Specific examples of the amino basic component represented by the above formula (6) or (7) include:

3,4-diamino-1,5-benzenediol; 3,3'-dihydroxy-4,4-diaminobiphenyl;

3,3'-diamino-4,4'-dihydroxybiphenyl;

2,2'-bis(3-amino-4-hydroxyphenyl)ketone;

2,2'-bis(3-amino-4-hydroxyphenyl)sulfide;

2,2'-bis(3-amino-4-hydroxyphenyl)ether;

2,2'-bis(3-hydroxy-4-aminophenyl)sulfone;

2,2-bis(3-amino-4-hydroxyphenyl)propane;

2,2-bis(3-hydroxy-4-aminophenyl)propane;

2,2-bis(3-hydroxy-4-aminophenyl)methane;

2,2-bis(3-amino-4-hydroxyphenyl)hexafluoropropane;

2,2-bis(3-hydroxy-4-aminophenyl)hexafluoropropane; and

2,2-bis(3-amino-4-hydroxyphenyl)difluoropropane. The amino basic component may be used alone or in combination with two or more types thereof.

Polybenzazole used in the present invention is synthesized by dissolving each of the acid component and the amino basic component in anhydrous acid having no oxidation effect as a reaction solvent in an inert atmosphere to prepare a reaction solution; and gradually heating the reaction solution from 70°C to 200°C, while the solution is vigorously stirred or sheared for a reaction, to obtain polybenzazole. The acid component and the amino basic component are preferably reacted in equimolar amounts or substantially equimolar amounts. The addition order of the components is not limited. When a dihalide is used as an acid component, the reaction is preferably carried in the presence of a hydrogen halide trapping agent. Examples of the hydrogen halide trapping agent include tertiary amines such as pyridine, triethylamine, and dimethylaniline.

Specific examples of the reaction solvent include polyphosphoric acid, methanesulfonic acid, cresol, and sulfuric acid at high concentration. These reaction solvents may be used alone, or as a mixture of two or more types thereof. Among those, polyphosphoric acid, methanesulfonic acid, or a mixture thereof, most preferably polyphosphoric acid are preferable for the reaction.

Next, an embodiment in accordance with the present invention of a production method for an article formed of polybenzazole will be described.

The method of producing the article formed of polybenzazole in an embodiment according to the present invention includes the steps of: preparing a liquid that contains polybenzazole (referred as "polybenzazole-containing liquid"); shaping the liquid into a desired shape; applying a magnetic field or an electrical field to the liquid in the desired shape containing the polybenzazole to orientate molecular chains of polybenzazole in a specific direction; and solidifying the liquid in the desired shape while maintaining the orientation of the molecular chains of polybenzazole.

In one embodiment, the polybenzazole-containing liquid may be a polybenzazole solution prepared by dissolving polybenzazole in a solvent. The solvent for preparing the polybenzazole solution may be any solvent similar to the reaction solvent used in synthesis of polybenzazole abovementioned, preferably the same one as the reaction solvent. Polybenzazole may be purified through a conventional technique such as re-precipitation before the polybenzazole solution is prepared, if required.

The concentration of polybenzazole in the solution is preferably sufficiently high such that polybenzazole exhibits liquid crystallinity. The concentration of polybenzazole in the solution is preferably 2 to 30 wt%, more preferably 5 to 25 wt%, and furthermore preferably 5 to 20 wt% to facilitate the orientation of the molecular chains of polybenzazole .

The maximum concentration of polybenzazole in the solution is mainly limited by physical factors such as a solubility of polybenzazole to the solvent and a viscosity of the polybenzazole solution. A concentration of polybenzazole exceeding 30 wt% in the polybenzazole solution excessively increases the viscosity of the solution, and thus the molecular chains of polybenzazole are hardly orientated. The polybenzazole solution with a concentration of polybenzazole of less than 2 wt% therein cannot exhibit liquid crystallinity. Such a low concentration of polybenzazole provides a small effect in promoting the orientation of the molecular chains of polybenzazole through magnetic field application, to thereby deteriorate anisotropic characteristics of the article formed of polybenzazole.

The limiting viscosity of polybenzazole is preferably 1 to 25 dl/g, more preferably 1 to 20 dl/g, furthermore preferably 3 to 15 dl/g through measurement with an Ostwald viscometer at 25°C using methanesulfonic acid as a solvent (in accordance with American Society for Testing Materials standard ASTM D2857-95). Polybenzazole with a limiting viscosity of polybenzazole of less than 1 dl/g generally has a low molecular weight, leading to difficulties in film formation. Polybenzazole with a limiting viscosity of polybenzazole exceeding 25 dl/g provides a high viscosity when it is dissolved in a solvent to prepare a solution, and thus the polybenzazole molecules in that solution are hardly orientated.

The polybenzazole solution may include reinforcers such as glass fibers, various fillers, pigments, dyes, fluorescent whiteners, dispersants, stabilizers, ultraviolet absorbers, antistatic agents, antioxidants, heat stabilizers, lubricants and plasticizers in a small amount.

An example of a method for shaping the polybenzazole solution into a desired shape includes a method of casting the solution on a substrate through a die such as a slit die, but the method is not limited thereto. As shown in Fig. 5, the polybenzazole solutionmaybe spread on a substrate 3 through a slit die and another substrate 3 may be placed over the spread polybenzazole solution, to thereby sandwich the polybenzazole solution between the two substrates 3. Thus, the method prevents polybenzazole solution from being degraded by oxygen.

The substrate 3 is not particularly limited, but the substrate 3 preferably employs a closed-loop endless belt, endless drum, or endless film for obtaining a continuous uniform polybenzazole film as a resultant article. Further, a glass sheet or a resin film can be used as a substrate. The substrate may be formed of a metal, and is particularly preferably formed of stainless steel, hastelloy alloy, or tantalum.

In a lyotropic liquid crystal, exhibition of liquid crystallinity depends on both conditions of the concentration and temperature of the solution. Thus, the polybenzazole solution in a desired shape may be heated after the aforementioned shaping step for developing liquid crystallinity of the polybenzazole solution, if required. To be specific, the polybenzazole

solution spread on a substrate is heated to a temperature range in which the polybenzazole solution exhibits liquid crystallinity. Alternatively, the polybenzazole solution in a desired shape is heated to a temperature range in which the polybenzazole solution does not exhibit liquid crystallinity to transit polybenzazole into an amorphous state once. Then, polybenzazole is gradually cooled to a temperature range in which the solution exhibits liquid crystallinity, to thereby provide a more largely grown liquid crystal phase. Alternatively, the aforementioned heating and cooling may be combined sequentially. Heating is carried out in a temperature in a range of usually 40 to 250°C, preferably 40 to 200°C, more preferably 60 to 150°C. A heating method is not particularly limited, and examples thereof include a method of blowing humid air at high temperatures toward the polybenzazole solution, a method of irradiating the polybenzazole solution with ultraviolet rays using an ultraviolet lamp, and a dielectric heating method.

As a method of orientating the molecular chains of polybenzazole in the polybenzazole solution, it is preferable that a magnetic field be applied to the polybenzazole solution shaped in a desired shape such that lines of magnetic force are parallel with the desired orientation direction. A magnetic flux density of the magnetic field is preferably 1 to 30 tesla (T), more preferably 2 to 25 T, furthermore preferably 3 to 20 T. A magnetic flux density of less than 1T may provide insufficient orientation of themolecular chains of polybenzazole. A magnetic flux density exceeding 30 T increases cost for improving the magnetic flux density of the magnetic field.

Solidification of the polybenzazole solution can be carried out through simple vaporization of the solvent, preferably through use of a coagulating liquid. The coagulating liquid is a substance that is compatible with the solvent of the polybenzazole solution but does not dissolve polybenzazole. The coagulating liquid is brought into contact with the polybenzazole solution shaped into a desired shape to dissolve only the solvent of the polybenzazole solution therein. As a result, solid polybenzazole is precipitated in the liquid phase, thereby accomplishing the solidification of the polybenzazole. The method using a coagulating liquid can eliminate use of heating device for evaporating a solvent or a device for collecting the evaporated solvent and easily accomplish the solidification of polybenzazole. In addition, when a strong acid, such as polyphosphoric acid, is used as the solvent, use of coagulating liquid is preferable in the view of safety for worker, because the strong acid is diluted by the coagulating liquid.

Examples of a substance that can be used as the coagulating liquid include water, an aqueous solution of phosphoric acid, an aqueous solution of sulfuric acid, an aqueous solution of sodium hydroxide, methanol, ethanol, acetone, and ethylene glycol. These substance may be used alone or as a mixture of two or more types thereof. In the step of solidifying the polybenzazole solution, a magnetic field may be continuously applied to the solution in order to maintain the orientation of the molecular chains of polybenzazole. 10 to 70 wt% aqueous solution of phosphoric acid or lower alcohol is particularly preferably used as the coagulating liquid because the exchange between the coagulating liquid and the solvent of the polybenzazole solution gently occur so that roughness on a film surface will be suppressed.

The coagulating liquid has a temperature of preferably -60 to 60°C, more preferably -30 to 30°C, most preferably -20 to 0°C. A temperature of the coagulating liquid exceeding 60°C may form a rough surface of a resultant article or cause a density difference between the front and back of the article. A temperature of the coagulating liquid of less than -60°C deteriorates physical properties or decreases the coagulation rate, to thereby reduce productivity.

The coagulated polybenzazole is preferably washed before being dried. The washing involves, for example: running a substrate supporting the solidified polybenzazole in a wash fluid; or spraying a wash fluid on to the solidified polybenzazole. Water is usually used as the wash fluid, but warm water may be used for washing if required. The solidified polybenzazole may be neutralized and washed with an aqueous solution of alkali such as sodiumhydroxide or lithium hydroxide, and then washed with water. In the solidified polybenzazole after washing preferably, each concentration of an acid component, an amino basic component, and an inorganic salt therein is 500 ppm or less. The concentration of an acid component, an amino basic component, or an inorganic salt exceeding 500 ppm after washing is not preferable, because degradation (decomposition) of polybenzazole may be caused and characteristics of the article formed of polybenzazole may be deteriorated.

When the article formed of polybenzazole is used as a film directly formed on a substrate such as an insulating film for a semiconductor, a sealant, or an orientated film for a display, the solidified polybenzazole may be dried while left standing or while being stretched, to thereby obtain a polybenzazole film formed on the substrate.

Meanwhile, when the article formed of polybenzazole is used as a base film such as a flexible printed-wiring substrate film or a magnetic recording film substrate, the polybenzazole film formed on the substrate may be dried and then peeled from the substrate to obtain a polybenzazole film. Alternatively, the solidified polybenzazole may be peeled from the substrate and then dried to obtain a polybenzazole film. A drying method for the solidified polybenzazole is not particularly limited, and examples thereof include: a method using a heated gas such as air, nitrogen, or argon; a method using radiant heat of an electrical heater, or an infrared lamp; and a dielectric heating method.

When the solidified polybenzazole is dried, an outer peripheral edge portion of the solidified polybenzazole may be fixed to restrict shrinkage thereof. The solidified polybenzazole is dried at a temperature of preferably 100 to 500°C, more preferably 100 to 400°C, most preferably 100 to 200°C. A drying temperature of less than 100°C is not preferable because the solidified polybenzazole is hardly dried.

In the present invention, the step of shaping the polybenzazole solution, and the subsequent steps of heating

the solution, applying magnetic field to the solution, solidifying polybenzazole, washing the solidified polybenzazole, and drying the solidified polybenzazole may be conducted continuously. Alternatively, all or part of the steps may be conducted intermittently, that is, in a batch process.

Hereinafter, production methods for an article formed of polybenzazole in an embodiment as a polybenzazole film 1 according to the present invention will be described in more detail with reference to Figs. 5 and 6.

As a first embodiment of the present invention, a production method for an article formed of polybenzazole having molecular chains of polybenzazole orientated in the thickness direction (Z-axis direction of Fig. 1) of the polybenzazole film 1 will be described. First, a solution of polybenzazole used in the present invention with a certain concentration in which said polybenzazole is in a liquid crystal state is prepared. Next, the solution is spread on a substrate 3 from a slit die (not shown) and another substrate 3 is placed over the spread polybenzazole solution, thereby sandwiching the polybenzazole solution between the two substrates 3. Thus, the spread polybenzazole solution is shaped in a film. In other words, an intermediate film 2 having a specific thickness is formed.

As shown in Fig. 5, a pair of permanent magnets 4 is arranged with a magnet above and below the substrates 3 as a magnetic field generating device, to thereby apply a magnetic field to the intermediate film 2. The pair of permanent magnets 4 is arranged with a north pole and a south pole thereof facing each other such that lines of magnetic force 5 pass through the intermediate film 2 along the thickness thereof. By applying the magnetic field to the intermediate film 2 in this way, the molecular chains of polybenzazole therein is orientated in the thickness direction of the film. The substrates 3 are provided with heating devices (not shown) on both sides thereof, and the intermediate film 2 is maintained within a range of temperature in which the polybenzazole solution is in a liquid crystal state. The intermediate film 2 is solidified and dried, while the orientation is maintained. As a result, the polybenzazole film 1 having the molecular chains of polybenzazole highly orientated in the thickness direction thereof can be obtained. This polybenzazole film 1 has excellent anisotropic characteristics in the thickness direction thereof.

As a second embodiment in accordance with the present invention, a production method for an article formed of polybenzazole having molecular chains of polybenzazole orientated in a direction (X-axis direction or Y-axis direction of Fig. 1) along a surface of the polybenzazole film 1 will be described. This embodiment is the same as the method of the first embodiment except that the pair of permanent magnets 4 is provided with a magnet on the right and left of the intermediate film 2 sandwiched between the substrates 3. In this case, the lines of magnetic force 5 from the magnets 4 pass through the intermediate film 2 in the direction parallel to the surface of the intermediate film 2. As a result, the polybenzazole film 1 in which the molecular chains of polybenzazole are orientated in a direction along the surface thereof can be obtained. This polybenzazole film 1 has excellent anisotropic characteristics in the direction along the surface thereof.

These production methods can easily produce an article formed of polybenzazole in which the developing excellent anisotropic characteristics in a specific direction due to the orientation of the molecular chains of polybenzazole in the direction. Further, the molecular chains of polybenzazole are orientated by a magnetic field or an electrical field, and thus, the direction of the orientation can be controlled freely.

It should be apparent to those skilled in the art that the present invention can be embodied in many other specific forms without departing f romthe spirit or scope of the invention. Particularly, it should be understood that the invention may be embodied in the following forms.

In the production methods for the article formed of polybenzazole of the first and second embodiments, the polybenzazole solution may be replaced with a polybenzazole melt. In this case, the polybenzazole melt is heated to a temperature for maintaining a molten state through steps of preparing the melt, and shaping the melt in a desired shape and orientating the molecular chains of polybenzazole in the melt. Such a temperature is in a range of 100 to 450°C, more preferably 200 to 400°C.

In the production methods for the article formed of polybenzazole of the first and second embodiments, the permanent magnets 4 may be provided on only one side of the substrates 3. Further, the permanent magnets 4 may be provided such that the lines of magnetic force 5 extends in not only one direction but in two directions or more. The lines of magnetic force 5 may be curved or the like.

In the production methods for the article formed of polybenzazole of the first and second embodiments, the permanent magnets 4 may be replaced with electromagnets, superconducting magnets, or coils. The permanent magnets may be replaced with an electrical field generating device provided with an electrode, or a voltage adjuster. With such a configuration, the molecular chains of polybenzazole in the article are orientated in the direction of the electrical field, and the article formed of polybenzazole develops excellent anisotropic characteristics in that direction.

An article in an embodiment according to the present invention may be a laminate film. Examples of a known laminating method include: a method of laminating in a die head; and a method of forming a layer and then forming another layer thereon.

Next, embodiments of the present invention will be described in more detail with reference to examples and comparative examples.

(Examples 1 to 5)

In Example 1, 300 g of polyphosphoric acid (115% $H_3PO_4$), 5 g (23.4 mmol) of 4, 6-diaminoresorcinol dihydrochloride, and 4.76 g (23.4 mmol) of terephthalic acid dichloride were placed into a reaction vessel equipped with a stirrer, a nitrogen introducing pipe, and a drier, and the mixture was stirred at 70°C for 16 hours. While stirring, the solution was gradually heated and maintained at each temperature for a certain period for reacting the solution in the order of at 90°C for 5 hours, at 130°C for 3 hours, at 150°C for 16 hours, at 170°C for 3 hours, at 185°C for 3 hours, and at 200°C for 48 hours. Then, a crude polybenzoxazole solution was obtained. The crude polybenzoxazole solution was observed using a polarizing microscope to confirm that the crude polybenzoxazole solution exhibited liquid crystallinity.

Next, the crude polybenzoxazole solution was re-precipitated using methanol, acetone, and water, to obtain polybenzoxazole in debris. Polyphosphoric acid was added to the obtained polybenzoxazole to prepare a 12 wt% polybenzoxazole solution.

As shown in Fig. 5, the polybenzoxazole solution was applied between two substrates 3 for shaping into a film, to thereby obtain an intermediate film 2. Next, a pair of magnets 4 was arranged with one magnet above and below the substrate 3 such that lines of magnetic force 5 passed through the intermediate film 2 parallel with the thickness direction thereof. The intermediate film 2 was heated at 100°C for 20 minutes while a magnetic field of 4T was applied thereto. The intermediate film 2 was naturally cooled to room temperature and left standing. Then, the intermediate film 2 sandwiched between the substrates 3 was immersed in a mixed solution of methanol and water as a coagulating liquid. In the mixed solution, one of the substrates 3 was removed, and the intermediate film 2 was solidified. The solidified intermediate film 2 was immersed in the mixed solution for 1 hour, was immersed in water for 1 hour, and dried at 110°C for 2 hours. Thereby, a polybenzoxazole film 1 having a thickness of 10 to 30 μm was obtained. The application direction of the magnetic field corresponded to the Z-axis direction shown in Fig. 1. of the polybenzoxazole film 1 formed on the substrate.

In each of Examples 2 to 4, a polybenzoxazole film 1 was obtained in the same manner as that in Example 1 except that the magnetic flux density was changed to that shown in Table 1.

In Example 5, a polybenzoxazole film 1 was obtained in the same manner as that described in Example 1 except that the polybenzoxazole solution was applied between the two substrates 3 to form an intermediate film 2 and the substrates 3 were provided between the magnets 4 such that a surface of the intermediate film 2 was parallel with the lines of magnetic force 5 as shown in Fig. 6. The application direction of the magnetic field corresponded to the X-axis direction shown in Fig. 1 of the polybenzoxazole film formed on the substrate.

(Comparative Examples 1 to 3)

In Comparative Example 1, a 12 wt% polybenzoxazole solution that is same as that in Example 1 was applied between the two substrates to form an intermediate film 2. The intermediate film 2 was heated at 100°C for 20 minutes without applying a magnetic field, and was naturally cooled to room temperature. Then, the intermediate film 2 sandwiched between the substrates 3 was immersed in a mixed solution of methanol and water as a coagulating liquid. One of the substrates 3 was removed, and the intermediate film 2 was solidified. The solidified film 2 was peeled from the substrate, and was immersed in the mixed solution of methanol and water for 1 hour, was immersed in water for 1 hour, and dried at 110 °C for 2 hours. Thereby, a polybenzoxazole film 1 having a thickness of 10 to 30 μm was obtained.

In Comparative Example 2, a polybenzoxazole film 1 was obtained in the same manner as that in Example 1 except that a magnetic field with a magnetic flux density of 1 T was applied to the intermediate film 2 in the Z-axis direction as shown in Fig. 1.

In Comparative Example 3, a polybenzoxazole film 1 was obtained in the same manner as that in Example 1 except that a magnetic field with a magnetic flux density of 2 T was applied to the intermediate film 2 in the Z-axis direction as shown in Fig. 1.

Birefringence of the polybenzoxazole film 1 obtained in each of Examples and Comparative Examples due to the orientation of the polybenzoxazole molecular chains was observed using a polarizing microscope.

Tables 1 and 2 show orientation A, anisotropic magnetic susceptibility, and thermal diffusivity $\alpha$ and thermal conductivity $\lambda$ as characteristics exhibiting anisotropy of each polybenzoxazole film 1. These measurements were measured in the thickness direction (Z-axis direction) in Examples 1 to 4 and Comparative Examples 1 to 3, and in a direction along the surface of the film 1 (X-axis direction) in Example 5. The thermal diffusivity in the X-axis direction is represented by $\alpha_x$, and the thermal diffusivity in a Z-axis is represented by $\alpha_z$. The thermal conductivity in the X-axis direction is represented by $\lambda_x$, and the thermal conductivity in the Z-axis is represented by $\lambda_z$. The magnetic susceptibility in theX-axis direction is represented by $_{Xx}$, the magnetic susceptibility in the Y-axis direction is represented by $X_y$, and the magnetic susceptibility in the Z-axis direction is represented by $_{Xz}$. The anisotropic magnetic susceptibility $\Delta_X$ obtained from the difference between the magnetic susceptibility in the Z-axis direction and the magnetic susceptibility in the X-direction is represented by $X_z$ - $X_x$. The anisotropic magnetic susceptibility $\Delta_X$ obtained from the difference between the

magnetic susceptibility in the X-axis direction and the magnetic susceptibility in the Y-direction is represented by $Xx - X_Y$.

A superconducting quantum interference device (MPMS-5, manufactured by Quantum Design Inc.) was used for measuring the magnetic susceptibilities and calculating the anisotropic magnetic susceptibilities above-described. Fig. 9 shows a relationship between the anisotropic magnetic susceptibility $\Delta X$ and the thermal conductivity $\lambda$.

The degree of orientation A of the polybenzoxazole film was calculated from the expression (i) with a full width at half maximum $\Delta B$ of a peak in an X-ray diffraction intensity distribution pattern in an azimuthal angle that was obtained by measuring an intensity distribution at a scattering angle in a X-ray diffraction image (debye ring) of each polybenzoxazole film 1 using an X-ray diffractometer (M18XHF22-SRA, manufactured by MAC Science Co., Ltd.) as above-descried. Fig. 2 shows a diffraction pattern of the polybenzoxazole film of Example 4 in an equatorial direction through X-ray diffraction measurement, and Fig. 3 shows an X-ray diffraction intensity distribution thereof in an azimuthal angle direction at a diffraction peak angle $2\theta = 26°$.

Fig. 7 shows a diffraction pattern of the polybenzoxazole filmof Comparative Example 1 in an equatorial direction through X-ray diffraction measurement, and Fig. 8 shows an X-ray diffraction intensity distribution thereof in an azimuthal angle direction at a diffraction peak angle $2\theta = 26°$.

The thermal diffusivity of the film in the thickness direction thereof was measured using a thermal diffusivity measuring device (ai-Phase-$\alpha$, manufactured by ai-Phase Co., Ltd.) involving: directly forming an electrode on the surface of each film 1 through sputtering; attaching a lead wire to the electrode with a silver paste; and providing a sensor on the lower surface of the film 1 and a heater on the upper surface thereof for measurement at room temperature. The thermal diffusivity of the film in a direction along the surface of the film was measured using a two-dimensional thermal analysis device (ai-Phase-IR, manufactured by ai-Phase Co., Ltd.) equipped with an infrared ray camera. A L-shaped electrode (length: 4 mm, width: 1 mm) was formed on a sample surface through sputtering. The measurement was accomplished by observing heat flow in the X-axis direction and the Y axis direction shown in Fig. 1 at room temperature.

The thermal conductivity was determined from the thermal diffusivity of each film using the following expression (iii) .

$$\text{Thermal conductivity } \lambda = \alpha \times \rho \times Cp \cdots \text{(iii)}$$

(where, $\alpha$ represents thermal diffusivity, $\rho$ represents density, and Cp represents specific heat of the film)

Table 1

| | | Ex.1 | Ex.2 | Ex.3 | Ex.4 | Ex.5 | |
|---|---|---|---|---|---|---|---|
| Type of film | | PBO | PBO | PBO | PBO | PBO | |
| Magnetic field strength(T) | | 4 | 6 | 8 | 10 | 10 | |
| Direction of magnetic field applied | | Z-axis | Z-axis | Z-axis | Z-axis | X-axis | |
| Direction of orientation | | Z-axis | Z-axis | Z-axis | Z-axis | X-axis | |
| Degree of Orientation A | | 0.64 | 0.71 | 0.79 | 0.83 | 0.86 | |
| Anisotropic magnetic susceptibility (emu/g) | | $4.93 \times 10^{-8}$ ($\chi z-\chi x$) | $1.35 \times 10^{-7}$ ($\chi z-\chi x$) | $2.04 \times 10^{-7}$ ($\chi z-\chi x$) | $2.46 \times 10^{-7}$ ($\chi z-\chi x$) | $2.54 \times 10^{-7}$ ($\chi x-\chi Y$) | |
| Density ($kg \cdot m^{-3}$) | | 1433 | 1453 | 1459 | 1487 | 1418 | |
| Specific heat ($J \cdot kg^{-1} \cdot K^{-1}$) | | 1153 | 1153 | 1153 | 1153 | 1153 | |
| Thermal diffusivity ($m^2 \cdot s^{-1}$) | $\alpha_z$ | $3.8 \times 10^{-6}$ | $5.1 \times 10^{-6}$ | $6.6 \times 10^{-6}$ | $7.6 \times 10^{-6}$ | $\alpha_x$ | $25 \times 10^{-6}$ |
| Thermal conductivity (W/m·K) | $\lambda_z$ | 6.3 | 8.5 | 11.1 | 13.0 | $\lambda_x$ | 40.8 |

Table 2

| | | Comp.Ex.1 | Comp.Ex.2 | Comp.Ex.3 |
|---|---|---|---|---|
| Type of film | | PBO | PBO | PBO |
| Magnetic field strength (T) | | 0 | 1 | 2 |
| Direction of magnetic field applied | | Not applied | Z-axis | Z-axis |
| Direction of orientation | | along surface | Z-axis | Z-axis |
| Degree of Orientation A | | 0.55 | 0.58 | 0.59 |
| Anisotropic magnetic susceptibility (emu/g) | | $-7.68 \times 10^{-8}$ ( $\chi z$- $\chi x$) | $-4.38 \times 10^{-8}$ ( $\chi z$- $\chi x$) | $-2.13 \times 10^{-8}$ ( $\chi z$- $\chi x$) |
| Density($kg \cdot m^{-3}$) | | 1431 | 1452 | 1453 |
| Specific heat ($J \cdot kg^{-1} \cdot K^{-1}$) | | 1153 | 1153 | 1153 |
| Thermal diffusivity ($m^2 \cdot s^{-1}$) | $\alpha_z$ | $2.4 \times 10^{-6}$ | $2.7 \times 10^{-6}$ | $2.9 \times 10^{-6}$ |
| Thermal conductivity ($W/m \cdot K$) | $\lambda_z$ | 3.9 | 4.6 | 4.9 |

As shown in Table 1, the polybenzoxazole film 1 in each of Examples 1 to 5 has a degree of orientation A of 0.6 or more, and the polybenzoxazole molecular chains are highly orientated in a Z-axis or an X-axis direction, which is the direction of magnetic field application. The polybenzoxazole film 1 in each of Examples 1 to 5 has excellent anisotropic characteristics such as high thermal diffusivity and high thermal conductivity in the above orientation direction. In particular, when the polybenzoxazole film has an anisotropic magnetic susceptibility $\Delta_X$ of $1.0 \times 10^{-7}$ or more as obtained in Examples 2 to 5, the polybenzoxazole film has exceptional anisotropic characteristics such as a thermal diffusivity of $5.1 \times 10^{-6} m^2 \cdot s^{-1}$ or more anda thermal conductivity of 8 . 5 W/ (m · k) .

On the other hand, as shown in Table 2, the polybenzoxazole film 1 in each of Comparative Examples 1 to 3 has a low degree of orientation A of less than 0.6 in the Z-axis direction. Further, the polybenzoxazole film 1 in each of Comparative Examples 1 to 3 has an anisotropic magnetic susceptibility $\chi_z$ - $\chi_x$ of a negative value, and thus in Comparative Examples 1 to 3, the polybenzoxazole molecular chains are presumably orientated in a direction along the surface of the film 1, rather than in the thickness direction of the film 1. No significant differences were observed in values of thermal diffusivity and thermal conductivity of the film of Comparative Example 1 without magnetic field application and the films of Comparative Examples 2 and 3 with magnetic field application. Thus, a film having a low degree of orientation A of less than 0.6 presumably has polybenzoxazole molecular chains that are insufficiently orientated and has few anisotropic characteristics in the orientation direction.

The present examples and embodiments are to be considered as illustrative and not restrictive and the invention is not to be limited to the details given herein, but may be modified within the scope and equivalence of the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. An article formed of polybenzazole **characterized by** that said polybenzazole includes at least one repeating unit represented by one of the following formulas (1) to (4),

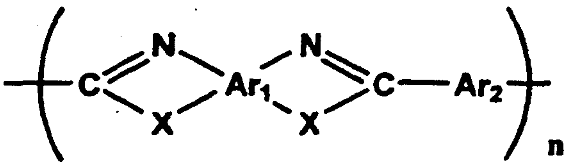

( 1 )

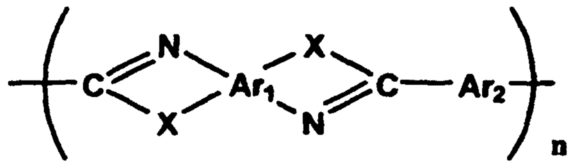

( 2 )

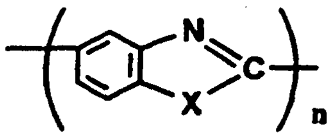

( 3 )

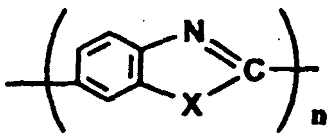

( 4 )

wherein X represents one of a sulfur atom, an oxygen atom and an imino group, $Ar_1$ and $Ar_2$ respectively represent aromatic hydrocarbon groups, and n is an integer of 10 to 500,
wherein molecular chains of said polybenzazole are orientated in a specific direction, and a degree of orientation A of the molecular chains is 0.6 or more and less than 1, as defined by an expression (i) as follows,

$$\text{Degree of orientation } A = (180 - \Delta B)/180 \qquad \text{(i)}$$

wherein $\Delta B$ is a full width at half maximum of a peak in an X-ray diffraction intensity distribution pattern in an azimuthal angle direction obtained by measuring an intensity distribution from 0 to 360 degrees in the azimuthal angle direction, at a peak scattering angle, in an X-ray diffraction image of the article.

**2.** An article formed of polybenzazole **characterized by** that said polybenzazole includes at least one repeating unit represented by one of the following formulas (1) to (4),

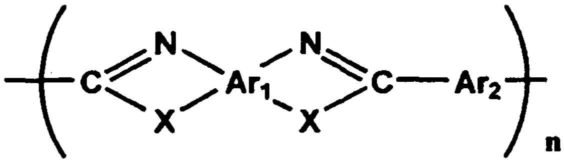

( 1 )

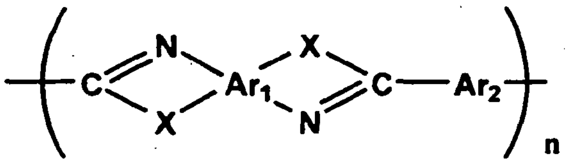

( 2 )

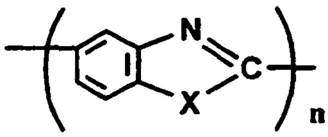

( 3 )

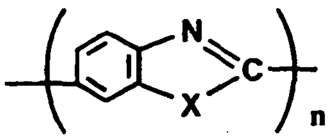

( 4 )

wherein X represents one of a sulfur atom, an oxygen atom and an imino group, $Ar_1$ and $Ar_2$ respectively represent aromatic hydrocarbon groups, and n is an integer of 10 to 500,
whereinmolecular chains of polybenzazole are orientated in a first direction, and anisotropic magnetic susceptibility $\Delta\chi$ [emu/g] of the article is in a range of $1.0 \times 10^{-8}$ to $1.0 \times 10^{-6}$ [emu/g] as defined by an expression (ii) as follows,

$$\text{Anisotropic magnetic susceptibility } \Delta\chi = \chi_{//} - \chi_{\perp} \quad \text{(ii)}$$

wherein $\chi$// is magnetic susceptibility in a first direction of the article, and $\chi\perp$ is magnetic susceptibility in a second direction, perpendicular to the first direction, of the article; and
wherein a thermal conductivity of the article in the first direction is in a range of 6.3 to 40.8 W/(m·K).

3. The article formed of polybenzazole according to claims 1 or 2 **characterized by** that the molecular chains of polybenzazole are orientated by one of magnetic and electric fields.

4. The article formed of polybenzazole according to any one of claims 1 through 3, **characterized by** that said polybenzazole includes at least one repeating unit of said formulas (1) and (2), wherein X is an oxygen atom, $Ar_1$ and $Ar_2$ are respectively selected from the following generic formulas (I) to (IV) and (V) to (VIII), and wherein Z represents one of an oxygen atom and a direct bonding.

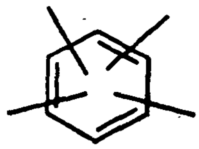

( I )

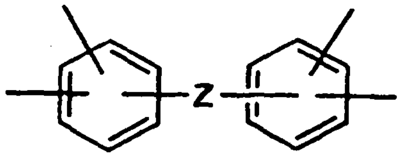

( I I )

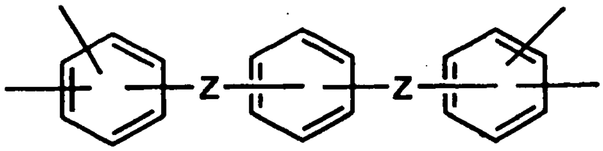

( I I I )

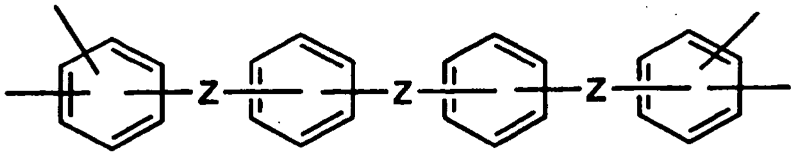

( I V )

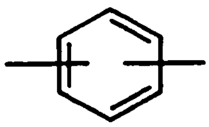

( V )

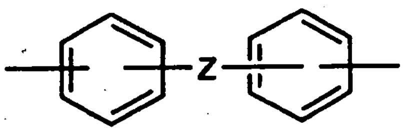

( V I )

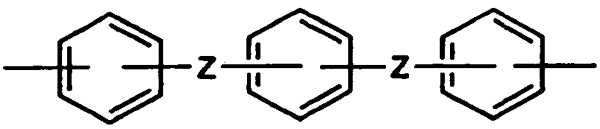

( V I I )

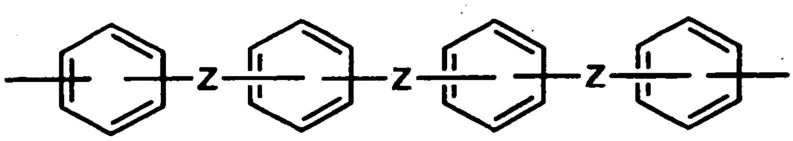

( V I I I )

5. The article formed of polybenzazole according to claim 1, **characterized by** that a thermal conductivity of the article in the specific direction is in a range of 6.3 to 40.8 W/(m· K).

6. The article formed of polybenzazole according to any one of claims 1 through 5, **characterized by** that the article is a film.

7. The article formed of polybenzazole according to claim 6, **characterized by** that the molecular chains of polybenzazole are orientated in a direction of the thickness of the film.

8. The article formed of polybenzazole according to claim 6, **characterized by** that the molecular chains of polybenzazole are orientated in a direction along the surface of the film.

9. A method for manufacturing an article formed of polybenzazole, wherein said polybenzazole includes at least one repeating unit represented by one of the following formulas (1) to (4),

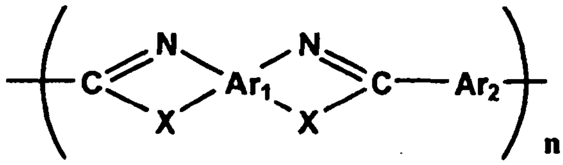

( 1 )

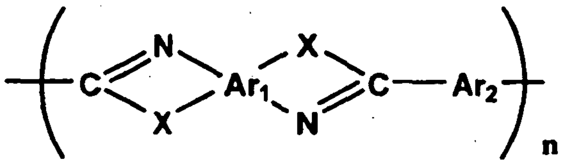

( 2 )

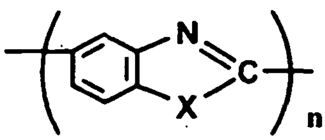

( 3 )

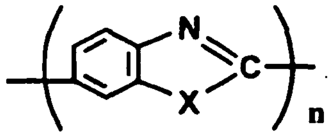

( 4 )

wherein X represents one of a sulfur atom, an oxygen atom and an imino group, $Ar_1$ and $Ar_2$ respectively represent aromatic hydrocarbon groups, and n is an integer of 10 to 500,
wherein molecular chains of said polybenzazole are orientated in a specific direction, and a degree of orientation A of the molecular chains is 0.6 or more and less than 1 as defined by an expression (i) as follows,

$$\text{Degree of orientation A} = (180-\Delta B)/180 \quad \cdots (i)$$

wherein $\Delta B$ is a full width at half maximum of a peak in an X-ray diffraction intensity distribution pattern in an azimuthal angle direction obtained by measuring an intensity distribution from 0 to 360 degrees in the azimuthal angle direction, at a peak scattering angle, in an X-ray diffraction image of the article, **characterized by** steps of:

preparing a liquid containing said polybenzazole,
shaping the liquid containing said polybenzazole into a desired shape,
applying one of magnetic and electric fields in a specific direction to the liquid containing said polybenzazole in the desired shape so as to orientate the molecular chains of said polybenzazole therein in the specific direction,
solidifying the liquid in the desired shape while the orientation of the molecular chains is maintained.

**10.** A method for manufacturing an article formed of polybenzazole, said polybenzazole includes at least one repeating unit represented by one of the following formulas (1) to (4),

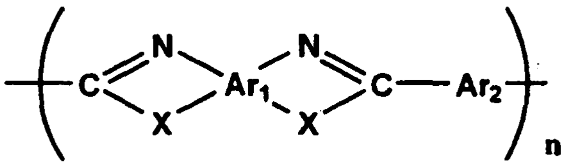

( 1 )

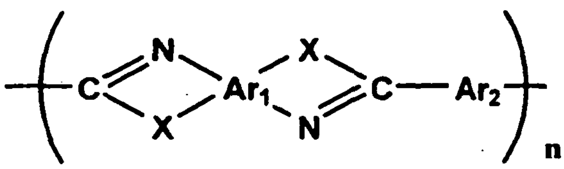

( 2 )

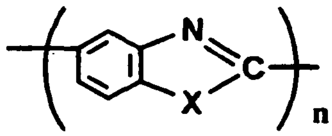

( 3 )

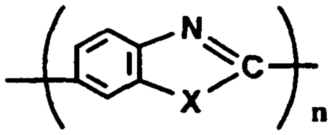

( 4 )

wherein X represents a sulfur atom, an oxygen atom or an imino group, $Ar_1$ and $Ar_2$ respectively represent aromatic hydrocarbon groups, and n is an integer of 10 to 500,
wherein molecular chains of polybenzazole are orientated in a first direction, and anisotropic magnetic susceptibility $\Delta\chi$ of the article is in a range of $1.0 \times 10^{-8}$ to $1.0 \times 10^{-6}$ [emu/g] as defined by an expression (ii) as follows,

$$\text{Anisotropic magnetic susceptibility } \Delta\chi = \chi_{//} - \chi_{\perp} \cdots \text{(ii)}$$

wherein $\chi$// is magnetic susceptibility in a first direction of the article, and $\chi\perp$ is magnetic susceptibility in a second direction, perpendicular to the first direction, of the article, **characterized by** steps of:

preparing a liquid containing said polybenzazole,
shaping the liquid containing said polybenzazole into a desired shape,
applying one of magnetic and electric fields in a specific direction to the liquid containing said polybenzazole in the desired shape so as to orientate the molecular chains of said polybenzazole therein in the specific direction,
solidifying the liquid in the desired shape while the orientation of the molecular chains is maintained,
wherein a thermal conductivity of the article in the first direction is in a range of 6.3 to 40.8 W/(m·K) .

**11.** The method according to claims 9 or 10, wherein the liquid containing said polybenzazole is a solution of said polybenzazole in a solvent, **characterized in that** the step of solidifying the liquid in the desired shape comprises contacting the liquid in the desired shape to a coagulating liquid that is compatible with the solvent but incapable of dissolving said polybenzazole, such that a solid polybenzazole is precipitated from the liquid phase.

**12.** The article formed of polybenzazole according to any one of claims 1 to 8, wherein a limiting viscosity of said polybenzazole is in a range of 1 to 25 dl/g, through measurement with an Ostwald viscometer at 25°C using methanesulfonic acid as a solvent.

**13.** The method for manufacturing an article formed of polybenzazole according to any one of claims 9 to 11, wherein the step of preparing a liquid containing said polybenzazole includes using said polybenzazole which has a limiting viscosity in a range of 1 to 25 dl/g measured with an Ostwald viscometer at 25°C using methanesulfonic acid as a solvent.

**Patentansprüche**

**1.** Ein aus Polybenzazol geformter Artikel, **dadurch gekennzeichnet, dass** das genannte Polybenzazol zumindest eine sich wiederholende Einheit, welche durch eine der folgenden Formeln (1) bis (4) dargestellt ist, enthält,

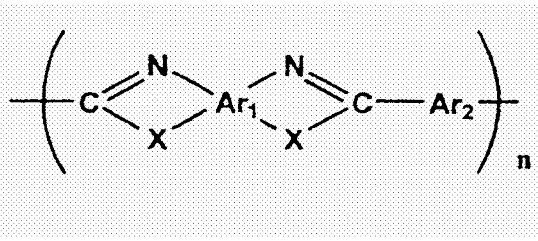

(1)

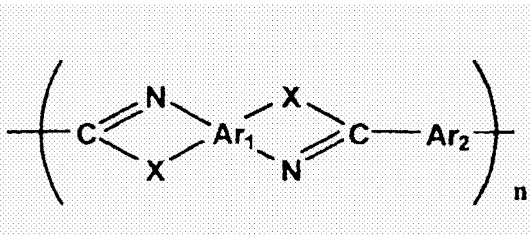

(2)

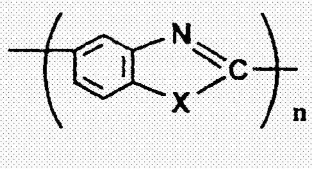

(3)

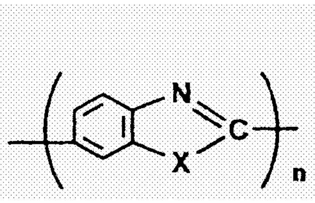

(4)

wobei X ein Schwefelatom, ein Sauerstoffatom oder eine Iminogruppe repräsentiert, $Ar_1$ und $Ar_2$ jeweils aromatische Hydrokarbongruppen repräsentieren und n eine ganze Zahl zwischen 10 und 500 ist,
wobei die Molekülketten des genannten Polybenzazols in eine spezifische Richtung orientiert sind und der Grad der Orientierung A der Molekülketten 0,6 oder mehr und weniger als 1 ist, wie durch den folgenden Ausdruck (i) definiert,

$$\text{Grad der Orientierung } A = (180-\Delta B)/180 \quad \text{(i)}$$

wobei $\Delta B$ die volle Breite auf halbmaximaler Höhe eines Peaks im Intensitätsverteilungsmuster der Röntgenbeugung in einer azimuthalen Winkelrichtung ist, welche durch Messung der Verteilungsintensität von 0 bis 360° in der azimuthalen Winkelrichtung in einem Peakstreuwinkel bei einem Röntgenbeugungsbild des Artikels erhalten wurde.

2. Ein aus Polybenzazol geformter Artikel, **dadurch gekennzeichnet, dass** das genannte Polybenzazol zumindest eine sich wiederholende Einheit, welche durch eine der folgenden Formeln (1) bis (4) dargestellt ist, enthält,

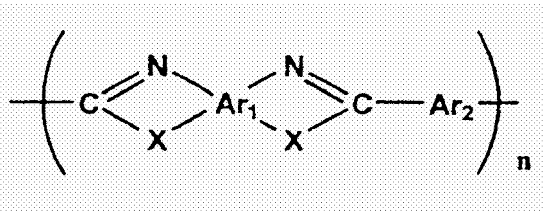

(1)

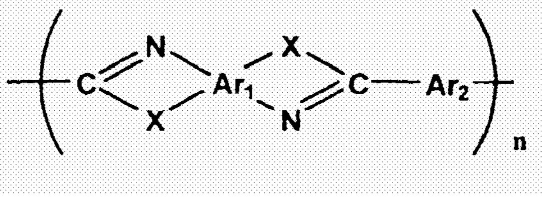

(2)

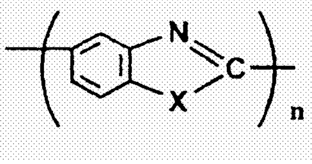

(3)

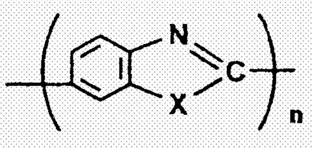

(4)

wobei X ein Schwefelatom, ein Sauerstoffatom oder eine Iminogruppe repräsentiert, $Ar_1$ und $Ar_2$ jeweils aromatische Hydrokarbongruppen repräsentieren und n eine ganze Zahl zwischen 10 und 500 ist,
wobei die Molekülketten des Polybenzazols in einer ersten Richtung orientiert sind und die anisotrope magnetische Suszeptibilität $\Delta_\chi$ [emu/g] des Artikels in einem Bereich von $1{,}0 \times 10^{-8}$ bis $1{,}0 \times 10^{-6}$ [emu/g] liegt, wie durch den folgenden Ausdruck (ii) definiert,

$$\text{anisotrope magnetische Suszeptibilität } \Delta_\chi = \chi_{//} - \chi_\perp \quad \text{(ii)}$$

wobei $\chi_{//}$ die magnetische Suszeptibilität in einer ersten Richtung des Artikels ist und $\chi\perp$ die magnetische Suszeptibilität in einer zweiten Richtung des Artikels, welche auf die erste Richtung rechtwinkelig steht, ist; und
wobei die thermische Konduktivität des Artikels in der ersten Richtung im Bereich von 6,3 bis 40,8 W/(m K) liegt.

**3.** Der aus Polybenzazol geformte Artikel nach den Ansprüchen 1 und 2, **dadurch gekennzeichnet, dass** die Molekülketten des Polybenzazols entweder durch magnetische oder elektrische Felder ausgerichtet werden.

**4.** Der aus Polybenzazol geformte Artikel nach den Ansprüchen 1 bis 3, **dadurch gekennzeichnet, dass** das genannte Polybenzazol zumindest eine sich wiederholende Einheit der genannten Formeln (1) und (2) enthält, wobei X ein Sauerstoffatom ist, $Ar_1$ und $Ar_2$ jeweils aus den folgenden generischen Formeln (I) bis (IV) und (V) bis (VIII) gewählt sind

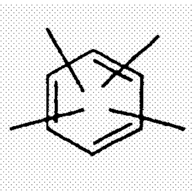
(I)

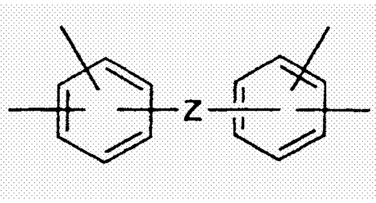
(II)

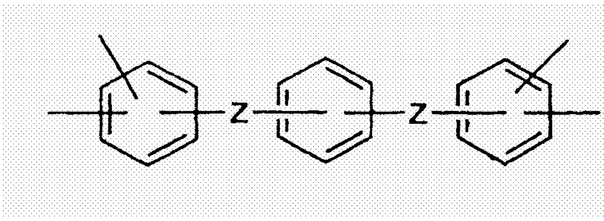
(III)

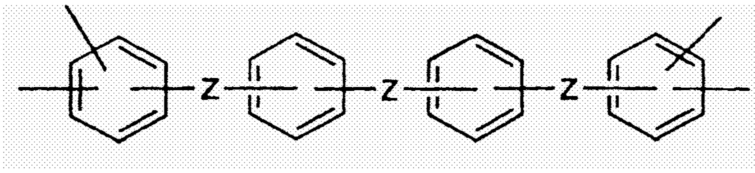
(IV)

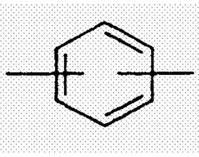
(V)

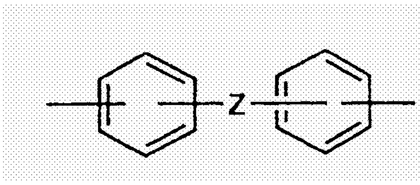
(VI)

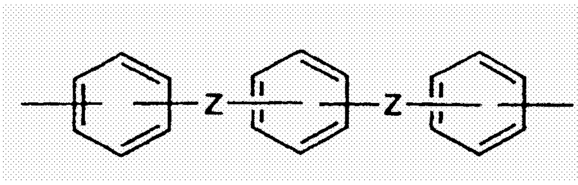
(VII)

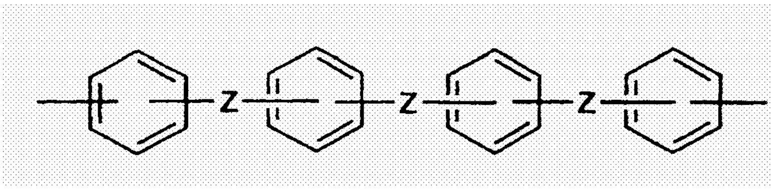

(VIII)

und wobei Z ein Sauerstoffatom oder eine direkte Bindung darstellt.

**5.** Der aus Polybenzazol geformte Artikel nach Anspruch 1, **dadurch gekennzeichnet, dass** die thermische Konduktivität des Ar-tikels in der spezifischen Richtung in einem Bereich von 6,3 bis 40,8 W/(m K) liegt.

**6.** Der aus Polybenzazol geformte Artikel nach den Ansprüchen 1 bis 5, **dadurch gekennzeichnet, dass** der Artikel ein Film ist.

**7.** Der aus Polybenzazol geformte Artikel nach Anspruch 6, **dadurch gekennzeichnet, dass** die Molekülketten des Polybenzazols in Richtung der Dicke des Films ausgerichtet sind.

**8.** Der aus Polybenzazol geformte Artikel nach Anspruch 6, **dadurch gekennzeichnet, dass** die Molekülketten des Polybenzazols in einer Richtung entlang der Oberfläche des Films ausgerichtet sind.

**9.** Verfahren zur Herstellung eines aus Polybenzazol geformten Artikels, wobei das genannte Polybenzazol zumindest eine sich wiederholende Einheit, welche durch eine der folgenden Formeln (1) bis (4) dargestellt ist, enthält,

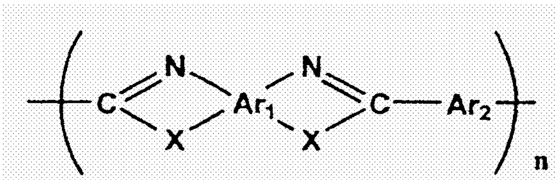

(1)

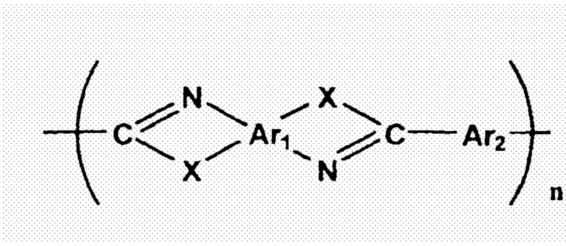

(2)

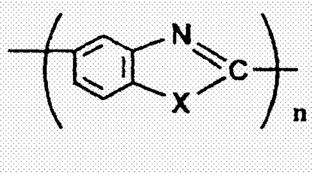

(3)

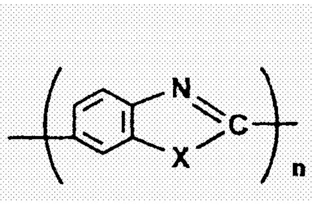

(4)

wobei X ein Schwefelatom, ein Sauerstoffatom oder eine Iminogruppe repräsentiert, $Ar_1$ und $Ar_2$ jeweils aromatische Hydrokarbongruppen repräsentieren und n eine ganze Zahl zwischen 10 und 500 ist,
wobei Molekülketten des genannten Polybenzazols in eine spezifische Richtung orientiert sind und der Grad der Orientierung A der Molekülketten 0,6 oder mehr und weniger als 1 ist, wie durch den folgenden Ausdruck (i) definiert,

$$\text{Grad der Orientierung } A = (180-\Delta B)/180 \quad \text{(i)}$$

wobei ΔB die volle Breite auf halbmaximaler Höhe eines Peaks im Intensitätsverteilungsmuster der Röntgenbeugung in einer azimuthalen Winkelrichtung ist, welche durch Messung der Verteilungsintensität von 0 bis 360° in der azimuthalen Winkelrichtung in einem Peakstreuwinkel bei einem Röntgenbeugungsbild des Artikels erhalten wurde, wobei das Verfahren durch die folgenden Schritte **gekennzeichnet** ist:

Herstellen einer Flüssigkeit, welche genanntes Polybenzazol enthält,
In-Form-Bringen der Flüssigkeit, welche genanntes Polybenzazol enthält, in eine gewünschte Form,
Anlegen eines magnetischen oder eines elektrischen Feldes in einer spezifischen Richtung zur Flüssigkeit, welche das genannte Polybenzazol in der gewünschten Form enthält, um die Molekülketten des genannten Polybenzazols in der spezifischen Richtung auszurichten,
Verfestigen der Flüssigkeit in der gewünschten Form, während die Ausrichtung der Molekülketten aufrechterhalten wird.

**10.** Verfahren zur Herstellung eines aus Polybenzazol geformten Artikels, wobei das genannte Polybenzazol zumindest eine sich wiederholende Einheit, welche durch eine der folgenden Formeln (1) bis (4) dargestellt ist, enthält,

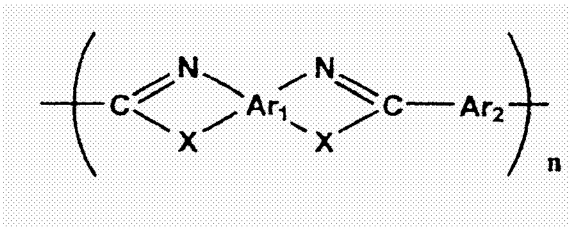

(1)

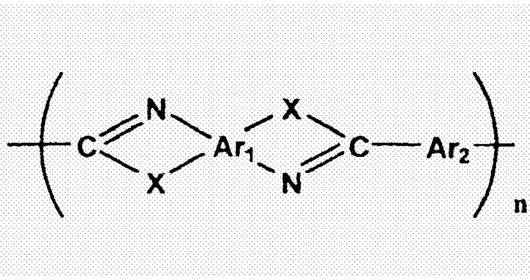

(2)

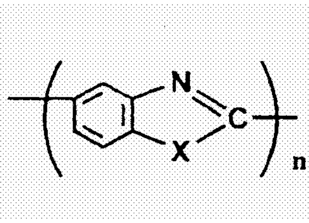

(3)

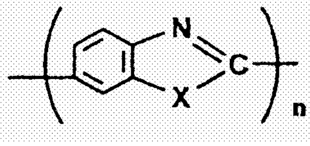

(4)

wobei X ein Schwefelatom, ein Sauerstoffatom oder eine Iminogruppe darstellt, $Ar_1$ und $Ar_2$ jeweils aromatische Hydrokarbongruppen darstellen und n eine ganze Zahl zwischen 10 und 500 ist,
wobei Molekülketten des Polybenzazols in einer ersten Richtung orientiert sind und die anisotrope magnetische Suszeptibilität $\Delta_\chi$ des Artikels in einem Bereich von 1,0 x $10^{-8}$ bis 1,0 x $10^{-6}$ [emu/g] liegt, wie durch den folgenden Ausdruck (ii) definiert,

$$\text{anisotrope magnetische Suszeptibilität } \Delta_\chi = \chi_{//} - \chi_{\perp} \quad \text{(ii)}$$

wobei $\chi_{//}$ die magnetische Suszeptibilität in einer ersten Richtung des Artikels ist und $\chi_{\perp}$ die magnetische Suszeptibilität in einer zweiten Richtung des Artikels, welche auf die erste Richtung rechtwinkelig steht, ist, **gekennzeichnet durch** folgende Schritte:

Herstellen einer Flüssigkeit, welche genanntes Polybenzazol enthält, in Form bringen der Flüssigkeit, welche genanntes Polybenzazol enthält, in eine gewünschte Form,
Anlegen eines magnetischen oder eines elektrischen Feldes in einer spezifischen Richtung zur Flüssigkeit, welche genanntes Polybenzazol in der gewünschten Form enthält, um die Molekülketten des genannten Polybenzazols in der spezifischen Richtung auszurichten,
Verfestigen der Flüssigkeit in der gewünschten Form, während die Ausrichtung der Molekülketten aufrechterhalten wird,

wobei die Konduktivität des Artikels in der ersten Richtung in einem Bereich von 6,3 bis 40,8 W/(m K) liegt.

**11.** Verfahren nach Anspruch 9 oder 10, wobei die Flüssigkeit, welche das genannte Polybenzazol enthält, eine Lösung des genannten Polybenzazols in einem Lösungsmittel ist, **dadurch gekennzeichnet, dass** der Schritt der Verfestigung der Flüssigkeit in der gewünschten Form das In-Kontakt-Bringen der Flüssigkeit in der gewünschten Form mit einer koagulierenden Flüssigkeit umfasst, welche mit dem Lösungsmittel mischbar ist, jedoch nicht in der Lage ist, das genannte Polybenzazol zu lösen, sodass festes Polybenzazol aus der flüssigen Phase präzipitiert wird.

**12.** Der aus Polybenzazol geformte Artikel nach einem der Ansprüche 1 bis 8, wobei die limitierende Viskosität des genannten Polybenzazols in einem Bereich von 1 bis 25 dl/g liegt, gemessen mit einem Ostwald Viskosimeter bei 25°C unter Einsatz von Methansulfonsäure als Lösungsmittel.

**13.** Verfahren zur Herstellung eines aus Polybenzazol geformten Artikels nach einem der Ansprüche 9 bis 11, wobei der Schritt des Herstellens der Flüssigkeit, welche das genannte Polybenzazol enthält, den Einsatz des genannten Polybenzazols umfasst, welches einen limitierende Viskosität in einem Bereich von 1 bis 25 dl/g, gemessen mit einem Ostwald Viskosimeter, bei 25°C hat, wobei Methansulfonsäure als Lösungsmittel verwendet wird.

## Revendications

**1.** Article formé de polybenzazole **caractérisé en ce que** ledit polybenzazole comprend au moins un motif répété représenté par l'une des formules (1) à (4) suivantes,

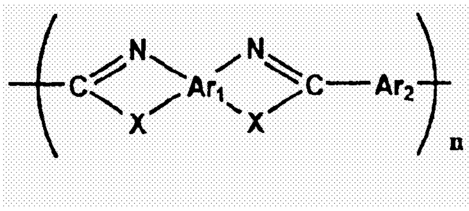

(1)

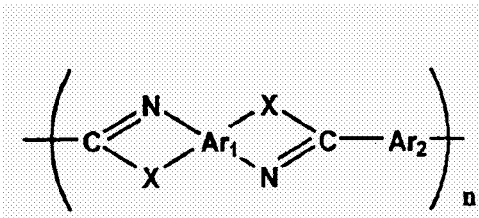

(2)

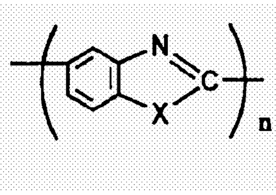

(3)

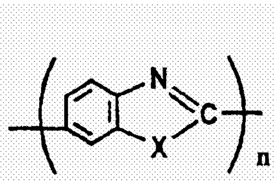

(4)

dans lesquelles X représente un élément parmi un atome de soufre, un atome d'oxygène et un groupe imino, $Ar_1$ et $Ar_2$ représentent respectivement des groupes d'hydrocarbures aromatiques, et n est un nombre entier allant de 10 à 500,

dans lesquelles les chaînes moléculaires dudit polybenzazole sont orientées dans une direction spécifique, et un degré d'orientation A des chaînes moléculaires est 0,6 ou plus et moins de 1, comme le définit l'expression (i) suivante,

$$\text{Degré d'orientation A} = (180 - \Delta B)/180 \qquad \text{(i)}$$

dans laquelle $\Delta B$ est une largeur à mi-hauteur d'un pic dans diagramme de distribution d'intensités en diffraction de rayons X selon une direction d'angle azimutal obtenue en mesurant une distribution d'intensités de 0 à 360 degrés dans la direction d'angle azimutal, à un angle de diffusion de pic, dans une image de diffraction de rayons X de l'article.

**2.** Article formé de polybenzazole **caractérisé en ce que** ledit polybenzazole comprend au moins un motif répété représenté par l'une des formules (1) à (4) suivantes,

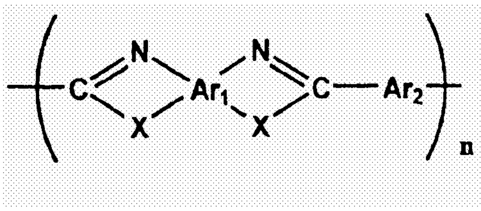

(1)

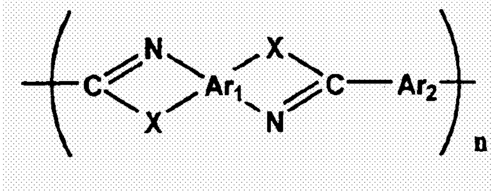

(2)

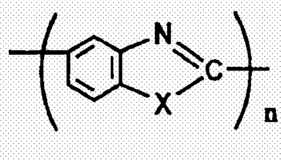

(3)

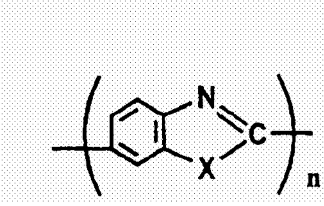

(4)

dans lesquelles X représente un élément parmi un atome de soufre, un atome d'oxygène et un groupe imino, $Ar_1$ et $Ar_2$ représentent respectivement des groupes d'hydrocarbures aromatiques, et n est un nombre entier allant de 10 à 500,
dans lesquelles les chaînes moléculaires du polybenzazole sont orientées dans une première direction, et la susceptibilité magnétique anisotrope $\Delta_\chi$ [emu/g] de l'article se trouve dans la gamme allant de $1{,}0 \times 10^{-8}$ à $1{,}0 \times 10^{-6}$ [emu/g] comme le définit l'expression (ii) suivante,

$$\text{Susceptibilité magnétique anisotrope } \Delta_\chi = \chi_{//} - \chi_\perp \qquad \text{(ii)}$$

dans laquelle $\chi//$ est la susceptibilité magnétique dans une première direction de l'article, et $\chi\perp$ est la susceptibilité magnétique dans une seconde direction, perpendiculaire à la première direction, de l'article.

3. Article formé de polybenzazole selon la revendication 1 ou 2 **caractérisé en ce que** les chaînes moléculaires du polybenzazole sont orientées par un champ parmi un champ magnétique et un champ électrique.

4. Article formé de polybenzazole selon l'une quelconque des revendications 1 à 3, **caractérisé en ce que** ledit polybenzazole comprend au moins un motif répété desdites formules (1) et (2), dans lesquelles X est un atome d'oxygène, $Ar_1$ et $Ar_2$ sont respectivement choisis parmi les formules génériques (I) à (IV) et (V) à (VIII) suivantes, et dans lesquelles Z représente un élément parmi un atome d'oxygène et une liaison directe.

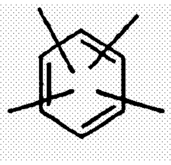

(I)

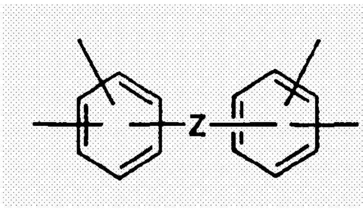

(II)

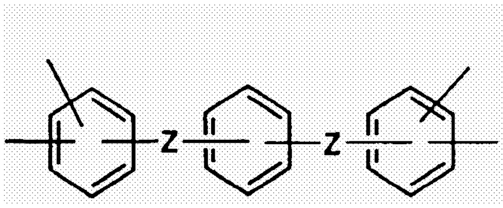

(III)

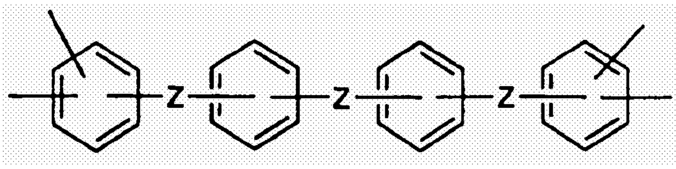

(IV)

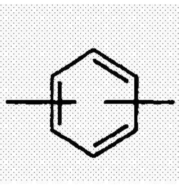

(V)

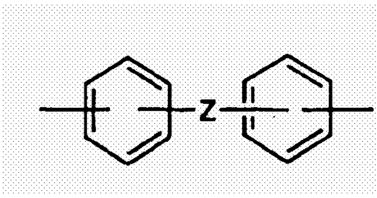

(VI)

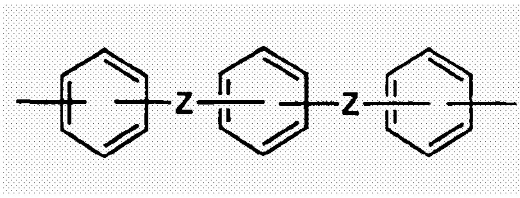

(VII)

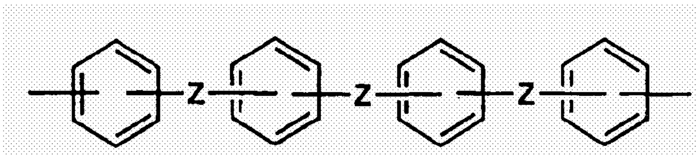

(VIII)

5. Article formé de polybenzazole selon la revendication 1, **caractérisé en ce qu'**une conductivité thermique de l'article dans la direction spécifique se trouve dans une gamme allant de 6,3 à 40,8 W/(m·K).

6. Article formé de polybenzazole selon l'une quelconque des revendications 1 à 5, **caractérisé en ce que** l'article est un film.

7. Article formé de polybenzazole selon la revendication 6, **caractérisé en ce que** les chaînes moléculaires du polybenzazole sont orientées dans une direction de l'épaisseur du film.

8. Article formé de polybenzazole selon la revendication 6, **caractérisé en ce que** les chaînes moléculaires du polybenzazole sont orientées dans une direction le long de la surface du film.

9. Procédé de fabrication d'un article formé de polybenzazole, dans lequel ledit polybenzazole comprend au moins un motif répété représenté par l'une des formules (1) à (4) suivantes,

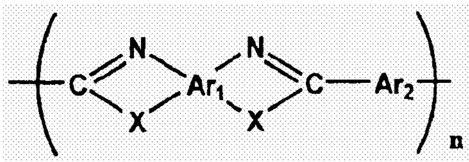

(1)

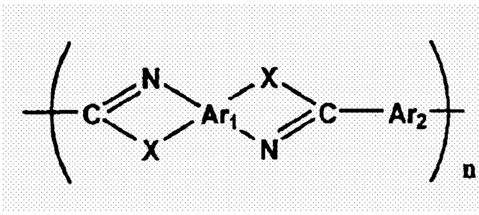

(2)

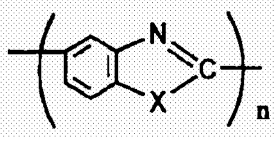

(3)

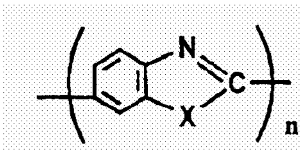

(4)

dans lesquelles X représente un élément parmi un atome de soufre, un atome d'oxygène et un groupe imino, $Ar_1$ et $Ar_2$ représentent respectivement des groupes d'hydrocarbures aromatiques, et n est un nombre entier allant de

10 à 500,
dans lesquelles les chaînes moléculaires dudit polybenzazole sont orientées dans une direction spécifique, et un degré d'orientation A des chaînes moléculaires est 0,6 ou plus et moins de 1, comme le définit l'expression (i) suivante,

$$\text{Degré d'orientation A} = (180 - \Delta B)/180 \qquad (i)$$

dans laquelle $\Delta B$ est une largeur à mi-hauteur d'un pic dans diagramme de distribution d'intensités en diffraction de rayons X selon une direction d'angle azimutal obtenue en mesurant une distribution d'intensités de 0 à 360 degrés dans la direction d'angle azimutal, à un angle de diffusion de pic, dans une image de diffraction de rayons X de l'article, **caractérisé par** les étapes consistant à :

préparer un liquide contenant ledit polybenzazole,
façonner le liquide contenant ledit polybenzazole en une forme souhaitée,
appliquer un champ parmi un champ magnétique et un champ électrique dans une direction spécifique sur le liquide contenant ledit polybenzazole dans la forme souhaitée afin d'orienter les chaînes moléculaires dudit polybenzazole dans celui-ci dans la direction spécifique,
solidifier le liquide dans la forme souhaitée alors que l'orientation des chaînes moléculaires est maintenue.

**10.** Procédé de fabrication d'un article formé de polybenzazole, ledit polybenzazole comprenant au moins un motif répété représenté par l'une des formules (1) à (4) suivantes,

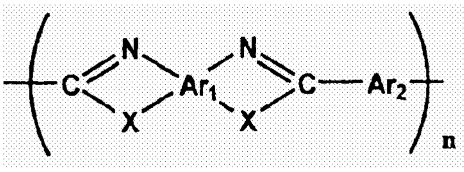
(1)

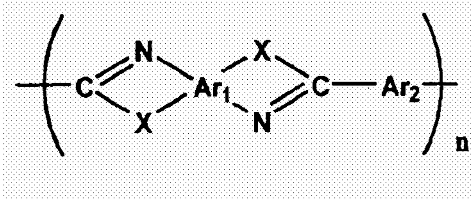
(2)

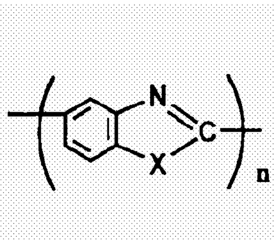
(3)

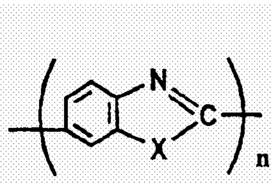
(4)

dans lesquelles X représente un atome de soufre, un atome d'oxygène ou un groupe imino, $Ar_1$ et $Ar_2$ représentent respectivement des groupes d'hydrocarbures aromatiques, et n est un nombre entier allant de 10 à 500, dans lesquelles les chaînes moléculaires du polybenzazole sont orientées dans une première direction, et la susceptibilité magnétique anisotrope $\Delta_\chi$ de l'article se trouve dans la gamme allant de $1,0 \times 10^{-8}$ à $1,0 \times 10^{-6}$ [emu/g] comme le définit l'expression (ii) suivante,

$$\text{Susceptibilité magnétique anisotrope } \Delta_\chi = \chi_{//} - \chi_{\perp} \qquad \text{(ii)}$$

dans laquelle $\chi_{\parallel}$ est la susceptibilité magnétique dans une première direction de l'article, et $\chi_{\perp}$ est la susceptibilité magnétique dans une seconde direction, perpendiculaire à la première direction, de l'article, **caractérisé par** les étapes consistant à :

préparer un liquide contenant ledit polybenzazole,
façonner le liquide contenant ledit polybenzazole en une forme souhaitée,
appliquer un champ parmi un champ magnétique et un champ électrique dans une direction spécifique sur le liquide contenant ledit polybenzazole dans la forme souhaitée afin d'orienter les chaînes moléculaires dudit polybenzazole dans celui-ci dans la direction spécifique,
solidifier le liquide dans la forme souhaitée alors que l'orientation des chaînes moléculaires est maintenue,
dans lequel une conductivité thermique de l'article dans la première direction se trouve dans la gamme allant de 6,3 à 40,8 W/(m·K).

**11.** Procédé selon la revendication 9 ou 10, dans lequel le liquide contenant ledit polybenzazole est une solution dudit polybenzazole dans un solvant, **caractérisé en ce que** l'étape de solidification du liquide dans la forme souhaitée comprend de mettre en contact le liquide dans la forme souhaitée avec un liquide coagulant qui est compatible avec le solvant mais incapable de dissoudre ledit polybenzazole, de telle sorte qu'un polybenzazole solide soit précipité à partir de la phase liquide.

**12.** Article formé de polybenzazole selon l'une quelconque des revendications 1 à 8, dans lequel un indice limite de viscosité dudit polybenzazole est situé dans la gamme allant de 1 à 25 dl/g, mesuré avec un viscosimètre Ostwald à 25 °C utilisant de l'acide méthanesulfonique comme solvant.

**13.** Procédé de fabrication d'un article formé de polybenzazole selon l'une quelconque des revendications 9 à 11, dans lequel l'étape de préparation d'un liquide contenant ledit polybenzazole comprend l'utilisation dudit polybenzazole qui a un indice limite de viscosité situé dans la gamme allant de 1 à 25 dl/g, mesuré avec un viscosimètre Ostwald à 25 °C utilisant de l'acide méthanesulfonique comme solvant.

**Fig. 1**

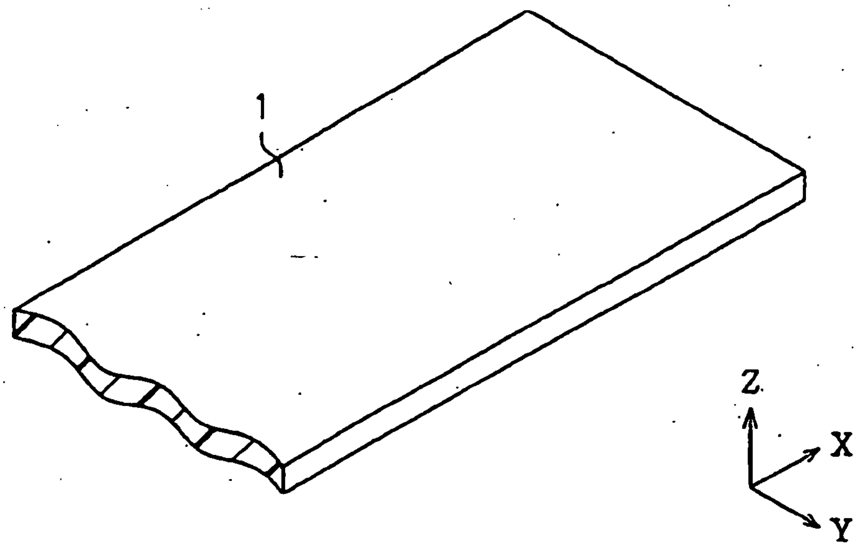


**Fig. 2**

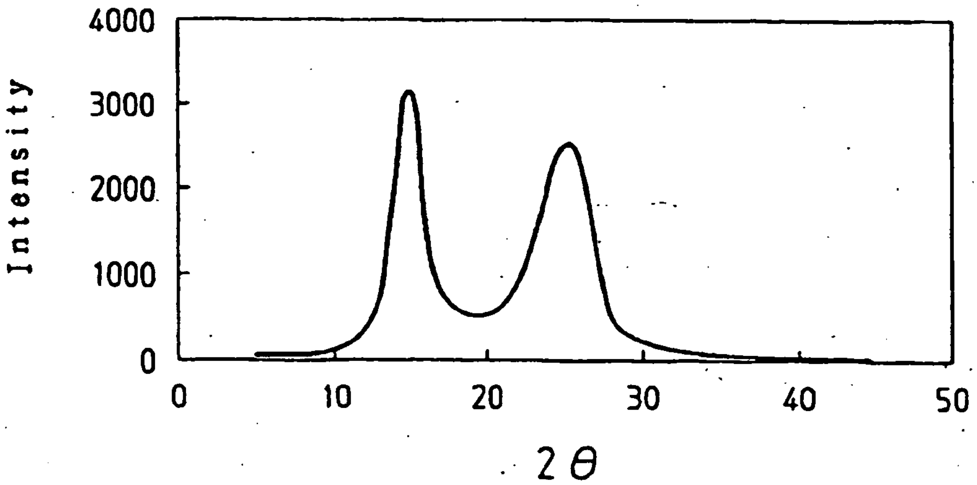

# Fig. 3

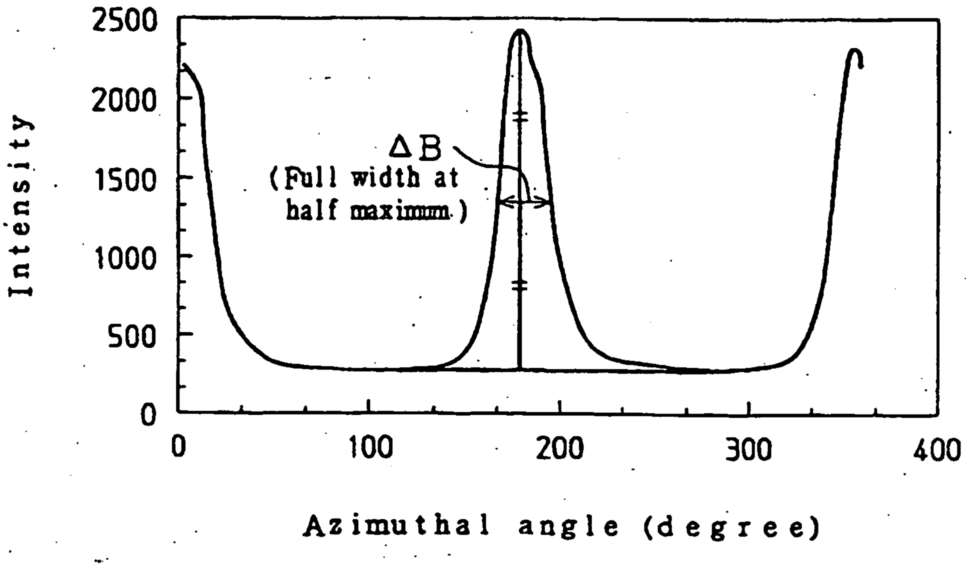
2500
2000
1500
1000
500
0
Intensity
ΔB
(Full width at half maximum)
0
100
200
300
400
Azimuthal angle (degree)

# Fig. 4

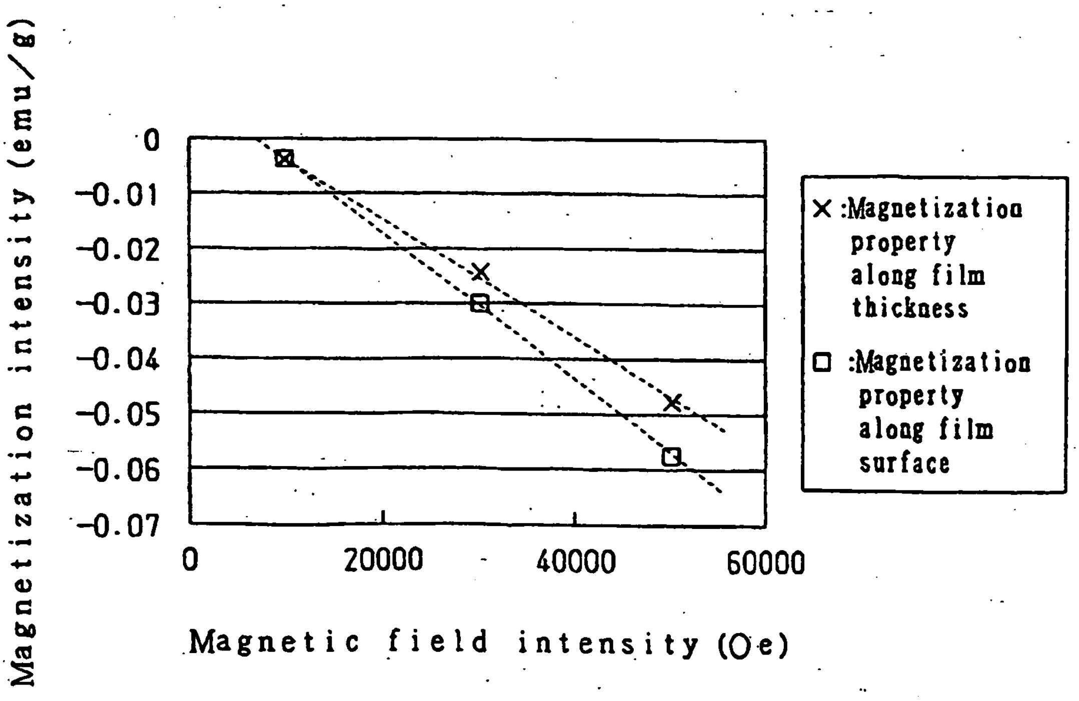
Magnetization intensity (emu/g)
0
-0.01
-0.02
-0.03
-0.04
-0.05
-0.06
-0.07
0
20000
40000
60000
Magnetic field intensity (Oe)
× :Magnetization property along film thickness
□ :Magnetization property along film surface

Fig. 5

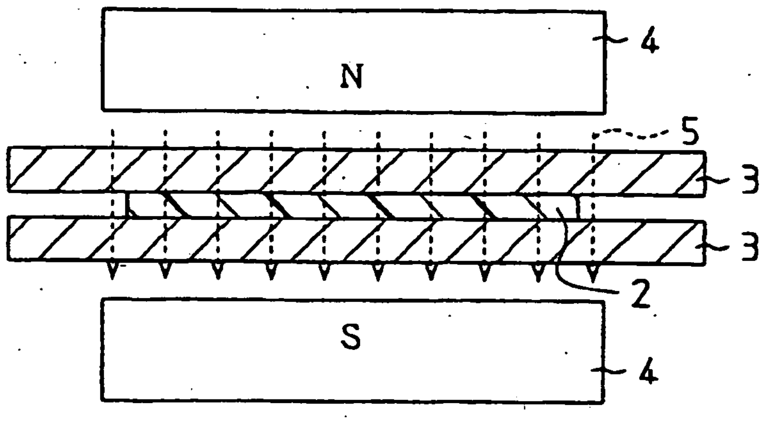


Fig. 6

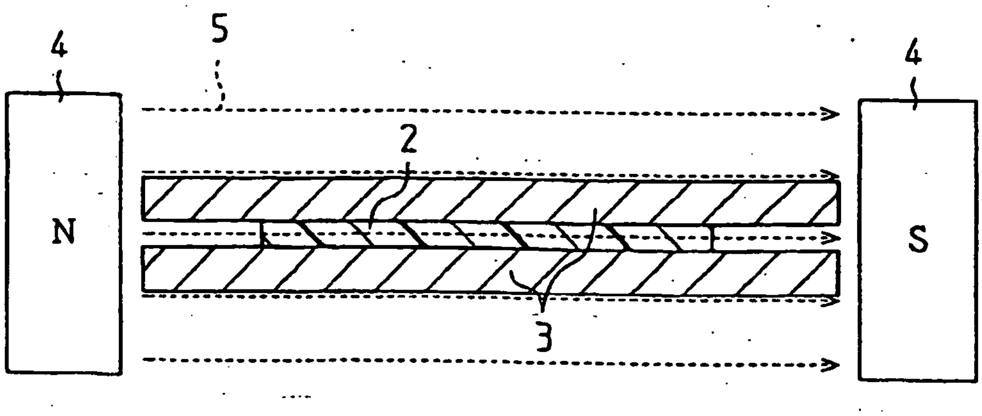

Fig. 7

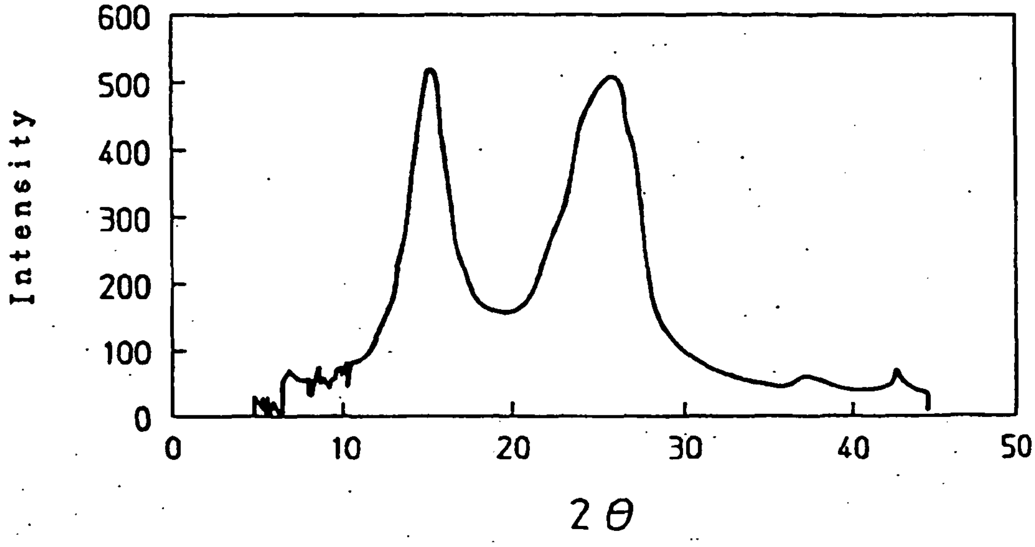
600
500
400
300
200
100
0
Intensity
0
10
20
30
40
50
2 θ

Fig. 8

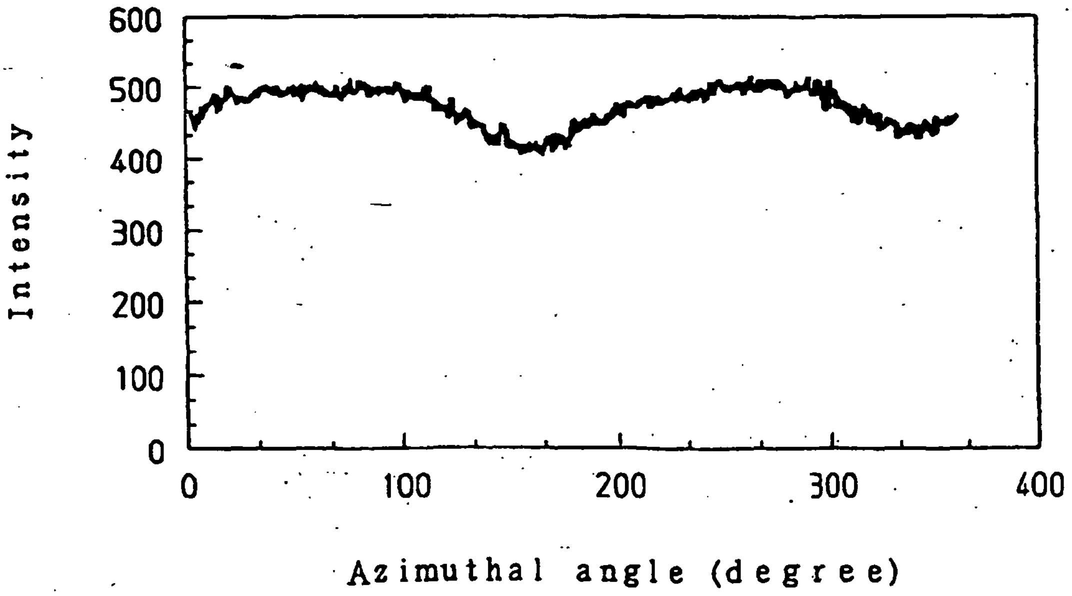
600
500
400
300
200
100
0
Intensity
0
100
200
300
400
Azimuthal angle (degree)

# Fig. 9

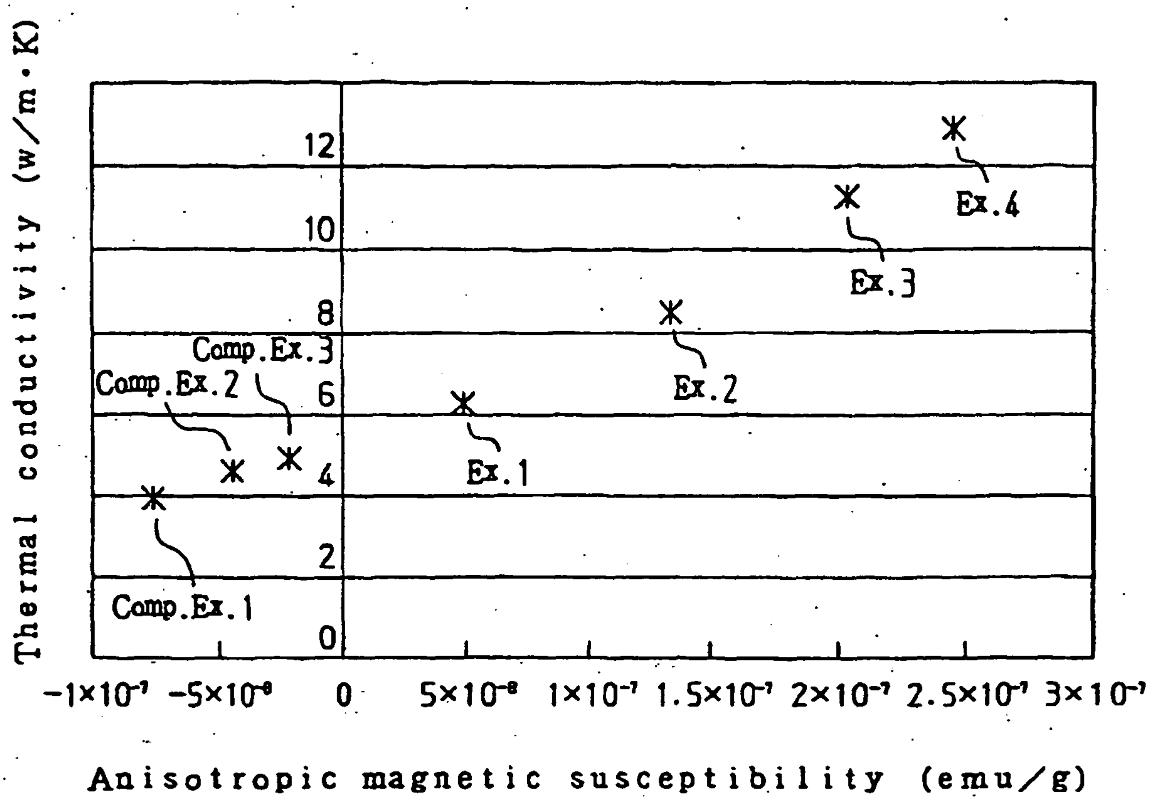
Thermal conductivity (w/m・K)
12
10
8
6
4
2
0
Comp.Ex.1
Comp.Ex.2
Comp.Ex.3
Ex.1
Ex.2
Ex.3
Ex.4
−1×10⁻⁷ −5×10⁻⁸ 0 5×10⁻⁸ 1×10⁻⁷ 1.5×10⁻⁷ 2×10⁻⁷ 2.5×10⁻⁷ 3×10⁻⁷
Anisotropic magnetic susceptibility (emu/g)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4202257 A
- JP 11171993 A
- JP 2000273214 A
- JP 2001011311 A
- JP 63074612 A